# EUROPEAN PATENT SPECIFICATION

(11) **EP 3 876 595 B1**
(45) Date of publication and mention of the grant of the patent: **20.05.2026**
(21) Application number: 18938871.3
(22) Date of filing: 31.10.2018
(51) Int. Cl.: H04W 28/16, H04L 1/00, H04L 5/00, H04L 5/14, H04L 27/26

(54) **USER TERMINAL AND WIRELESS COMMUNICATION METHOD**
BENUTZERENDGERÄT UND DRAHTLOSKOMMUNIKATIONSVERFAHREN
TERMINAL UTILISATEUR ET PROCÉDÉ DE COMMUNICATION SANS FIL

(43) Date of publication of application: 08.09.2021
(73) Proprietor: NTT DOCOMO, INC., Chiyoda-ku Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); HOU, Xiaolin, Beijing 100190 (CN)
(74) Representative: Hoffmann Eitle
(86) International application number: PCT/JP2018/040606
(87) International publication number: WO 2020/090060

(56) References cited:
- HUAWEI ET AL: "Remaining issues on beam management", vol. RAN WG1, no. Busan, Korea; 20180521 - 20180525, 11 May 2018 (2018-05-11), XP051461660, Retrieved from the Internet <URL:http://www.3gpp.org/ftp/tsg%5Fran/WG1%5FRL1/TSGR1%5F93/Docs> [retrieved on 20180511]
- INTERDIGITAL ET AL: "Remaining issues on beam management", vol. RAN WG1, no. Busan, Korea; 20180521 - 20180525, 12 May 2018 (2018-05-12), XP051462840, Retrieved from the Internet <URL:http://www.3gpp.org/ftp/tsg%5Fran/WG1%5FRL1/TSGR1%5F93/Docs> [retrieved on 20180512]
- SONY: "Remaining issues on downlink beam management", vol. RAN WG1, no. Sanya, China; 20180416 - 20180420, 6 April 2018 (2018-04-06), XP051413537, Retrieved from the Internet <URL:http://www.3gpp.org/ftp/tsg%5Fran/WG1%5FRL1/TSGR1%5F92b/Docs/> [retrieved on 20180406]
- SAMSUNG: "Discussions on NR multi-TRP and multi-panel support", vol. RAN WG1, no. Spokane, USA; 20170403 - 20170407, 2 April 2017 (2017-04-02), XP051243468, Retrieved from the Internet <URL:http://www.3gpp.org/ftp/Meetings_3GPP_SYNC/RAN1/Docs/> [retrieved on 20170402]
- ERICSSON: "Feature lead summary 1 on beam measurement and reporting", 3GPP TSG RAN WG1 #92 R1-1803260, 27 February 2018 (2018-02-27), XP051398449
- HUAWEI ET AL.: "Maintenance for beam management", 3GPP TSG RAN WG1 MEETING #94BIS R1-1810100, 12 October 2018 (2018-10-12), XP051517515
- QUALCOMM INCORPORATED: "Beam management for NR", 3GPP TSG RAN WG1 MEETING #94BIS R1-1811231, 12 October 2018 (2018-10-12), XP051518632
- MEDIATEK INC.: "Maintenance for reference signals and QCL", 3GPP TSG RAN WG1 MEETING #94BIS R1-1810428, 12 October 2018 (2018-10-12), XP051517837

## Description

### Technical Field

The present disclosure relates to a user terminal and a radio communication method in a next-generation mobile communication system.

### Background Art

In the UMTS (Universal Mobile Telecommunications System) network, the specifications of long term evolution (LTE) have been drafted for the purpose of achieving higher data rates, lower delays, and so on (see Non Patent Literature 1). In addition, LTE-Advanced (Third Generation Partnership Project (3GPP) Rel. (Release) 10-14) has been specified for the purpose of achieving higher capacity and advancement of LTE (3GPP Rel. 8, 9).

Successor systems to LTE (for example, also referred to as 5th generation mobile communication system (5G), 5G+ (plus), new radio (NR), or 3GPP Rel. 15 or later) are also being studied.
INTERDIGITAL ET AL: "Remaining issues on beam management", 3GPP DRAFT; R1-1807014, 12 May 2018 discusses BL beam management where if the scheduling offset between the reception of DCI and the first symbol of the triggered ap-CSI-RS is smaller than a threshold value, a UE may assume the same QCL-typeD applied for ap-CSI-RS resource(s) as the reception of PDSCH when ap-CSI-RS resource(s) is transmitted in the PDSCH region.
SONY: "Remaining issues on downlink beam management", 3GPP DRAFT; R1-1804593, 6 April 2018 discusses a case where if the time gap between DCI carrying the trigger of aperiodic CSI-RS and the CSI-RS transmission is greater than the threshold Threshold-Sched-Offset, a UE may have enough time to prepare and apply the indicated Rx spatial filter. Otherwise, this UE has to ignore the indicated TCI states and apply a default TCI state. From our understanding, a simple solution is in that slot a UE assumes aperiodic CSI-RS QCLed in Type D with DMRS of PDSCH.

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In future radio communication systems (e.g., NR), studies are underway to allow a user terminal (UE: User Equipment) to control, based on information about a quasi-co-location (QCL) of at least one of a signal and a channel (expressed as a signal/channel), reception processing (e.g., demapping, demodulation, decoding, reception beam formation, etc.) and transmission processing (e.g., mapping, modulation, coding, precoding, Tx beam formation, etc.) of the signal/channel.

In NR, the UE measures a channel state using a channel state information reference signal (CSI-RS) and feeds back (reports) channel state information (CSI) to a base station.

Aperiodic CSI (A-CSI, AP-CSI) reporting is being considered as a CSI feedback method. The CSI-RS measured for AP-CSI reporting may be referred to as AP CSI-RS (or A-CSI-RS) (Aperiodic CSI-RS).

In addition, in NR, studies are underway to allow one or more transmitting/receiving points (TRPs) (multi-TRP) to perform DL transmission (for example, AP CSI-RS transmission) to the UE using one or more panels (multi-panel).

However, since the multi-panel/TRP is not considered in the NR specifications so far, the QCL assumption of AP CSI-RS when the multi-panel/TRP is used cannot be properly controlled. Therefore, if the current NR specifications are followed, spatial diversity gain, high-rank transmission, etc. when using multi-panel/TRP cannot be suitably realized, and an increase in communication throughput may be suppressed.

Therefore, one of the purposes of the present disclosure is to provide a user terminal and a radio communication method capable of preferably performing DL communication even when a multi-panel/TRP is used.

### Solution to Problem

The mentioned problems are solved by the subject-matter of the independent claims.

Further preferred embodiments are defined in the dependent claims. Subject matter discussed throughout the following but not falling under the scope of the claims does not form part of the invention.

The user terminal according to one aspect of the present disclosure includes a reception section that receives a plurality of aperiodic channel state information-reference signals (AP CSI-RS) and a control section that determines, when a time offset between reception of corresponding downlink control information and reception of the AP CSI-RS is smaller than a given threshold for each AP CSI-RS, a default QCL (Quasi-Co-Location) assumption of the AP CSI-RS based on a specific signal or channel of a given panel ID (Identifier).

### Advantageous Effects of Invention

According to one aspect of the present disclosure, DL communication can be preferably performed even when a multi-panel/TRP is used.

### Brief Description of Drawings

Fig. 1 is a diagram showing an example of QCL assumption of a DMRS port of PDSCH.
Figs. 2A and 2B are diagrams showing an example of the QCL assumption of AP CSI-RS.
Figs. 3A to 3D are diagrams showing an example of a multi-panel/TRP scenario.
Fig. 4 is a diagram showing problems of the QCL assumption of AP CSI-RS when the multi-panel/TRP is used.
Figs. 5A and 5B are diagrams showing an example of the QCL assumption of AP CSI-RS in a first embodiment.
Figs. 6A and 6B are diagrams showing another example of the QCL assumption of AP CSI-RS in the first embodiment.
Figs. 7A and 7B are diagrams showing still another example of the QCL assumption of AP CSI-RS in the first embodiment.
Fig. 8 is a diagram showing an example of QCL assumption of AP CSI-RS in a second embodiment.
Fig. 9 is a diagram showing another example of the QCL assumption of AP CSI-RS in the second embodiment.
Fig. 10 is a diagram showing an example of the QCL assumption of AP CSI-RS in a combination of the first and second embodiments.
Fig. 11 is a diagram showing another example of the QCL assumption of AP CSI-RS in the combination of the first and second embodiments.
Fig. 12 is a diagram showing an example of control based on activation of AP CSI-RS.
Fig. 13 is a diagram showing an example of information for activating a TCI state of AP CSI-RS.
Fig. 14 is a diagram showing an example of the QCL assumption of AP CSI-RS when activation of AP CSI-RS is controlled.
Fig. 15 is a diagram illustrating an example of a schematic configuration of a radio communication system according to an embodiment.
Fig. 16 is a diagram illustrating an example of a configuration of a base station according to an embodiment.
Fig. 17 is a diagram illustrating an example of a configuration of a user terminal according to an embodiment.
Fig. 18 is a diagram illustrating an exemplary hardware configuration of a base station and a user terminal according to an embodiment.

### Description of Embodiments

### (QCL/TCI)

In NR, studies are underway to control reception processing (for example, at least one of reception, demapping, demodulation, and decoding) of at least one of a signal and a channel (expressed as a signal/channel) based on a transmission configuration indication state (TCI-state).

Here, the TCI-state is information regarding quasi-co-location (QCL) of a signal/channel, and may also be referred to as a spatial Rx parameter, spatial relation info, or the like. The TCI-state may be configured in UE for each channel or each signal.

QCL is an index indicating a statistical property of a signal/channel. For example, it may mean that if one signal/channel has a QCL relationship with another signal/channel, it can be assumed that these different signals/channels are the same in at least one of a doppler shift, a doppler spread, an average delay, a delay spread, and a spatial parameter (e.g., a spatial Rx parameter) (are QCL in at least one of these).

Note that, the spatial Rx parameter may correspond to a reception beam of the UE (e.g., a reception analog beam), and the beam may be identified based on spatial QCL. QCL (or at least one element of QCL) in the present disclosure may be replaced with spatial QCL (sQCL).

A plurality of types of QCL (QCL types) may be defined. For example, four QCL types A to D with different parameters (or parameter sets) that can be assumed to be identical may be provided. These parameters are as follows:
- QCL type A: Doppler shift, doppler spread, average delay, and delay spread;
- QCL Type B: Doppler shift and doppler spread;
- QCL type C: Doppler shift and average delay; and
- QCL type D: spatial Rx parameter.

Note that it may be referred to as QCL assumption for UE to assume that a given CORESET, channel, or reference signal has a specific QCL (for example, QCL type D) relation with another CORESET, channel, or reference signal.

UE may determine, based on a TCI-state of a signal/channel or QCL assumption, at least one of a transmission beam (Tx beam) and a reception beam (Rx beam) of the signal/channel.

The TCI-state may be, for example, information regarding QCL of a target channel (or a reference signal (RS) for the channel) and another signal (for example, another downlink reference signal (DL-RS). The TCI-state may be configured (specified) by higher layer signaling, physical layer signaling, or a combination thereof.

In the present disclosure, the higher layer signaling may be, for example, any of Radio Resource Control (RRC) signaling, Medium Access Control (MAC) signaling, broadcast information, and the like, or a combination thereof.

For the MAC signaling, for example, a MAC control element (MAC CE), a MAC protocol data unit (PDU), or the like may be used. The broadcast information may be, for example, a master information block (MIB), a system information block (SIB), a minimum system information (Remaining Minimum System Information (RMSI)), other system information (OSI), or the like.

The physical layer signaling may be, for example, downlink control information (DCI).

A channel for which a TCI-state is configured (specified) may be, for example, at least one of a physical downlink shared channel (PDSCH), a physical downlink control channel (PDCCH), a physical uplink shared channel (PUSCH), and a physical uplink control channel (PUCCH).

Further, RS having a QCL relation with the channel may be, for example, at least one of a synchronization signal block (SSB), a channel state information reference signal (CSI-RS), and a sounding reference signal (SRS).

SSB is a signal block including at least one of a primary synchronization signal (PSS), a secondary synchronization signal (SSS), and a physical broadcast channel (PBCH). SSB may be referred to as an SS/PBCH block.

An information element in a TCI-state configured by higher layer signaling ("TCI-state IE" of RRC) may include one or more pieces of QCL information ("QCL-Info"). The QCL information may include at least one of information regarding DL-RS having a QCL relation (DL-RS related information) and information indicating a QCL type (QCL type information). The DL-RS related information may include information such as an index of DL-RS (for example, an SSB index or a non-zero power CSI-RS resource ID), an index of a cell where RS is located, or an index of a bandwidth part (BWP) where RS is located.

### <TCI state for PDCCH>

The information regarding PDCCH (or DMRS antenna port associated with PDCCH) and QCL with a given DL-RS may be referred to as the TCI state for PDCCH or the like.

UE may determine a TCI-state for UE-specific PDCCH (CORESET) based on higher layer signaling.

In the present disclosure, the higher layer signaling may be, for example, any of Radio Resource Control (RRC) signaling, Medium Access Control (MAC) signaling, broadcast information, and the like, or a combination thereof.

For the MAC signaling, for example, a MAC control element (MAC CE), a MAC protocol data unit (PDU), or the like may be used. The broadcast information may be, for example, a master information block (MIB), a system information block (SIB), remaining minimum system information (RMSI), or the like.

For example, for UE, one or more (K) TCI-states may be configured by RRC signaling (ControlResourceSet information element) for each CORESET. Further, UE may activate one or more TCI-states for each CORESET using MAC CE. The MAC CE may be referred to as a TCI-state indication for UE-specific PDCCH MAC CE. The UE may monitor the CORESET based on the active TCI state corresponding to the CORESET.

### <TCI state for PDSCH>

Information regarding PDSCH (or DMRS antenna port associated with PDSCH) and QCL with a given DL-RS may be referred to as a TCI-state for PDSCH or the like.

For UE, M (M ≥ 1) TCI-states for PDSCH (M pieces of QCL information for PDSCH) may be notified (configured) by higher layer signaling. Note that the number M of TCI-states configured in UE may be limited by at least one of UE capability and a QCL type.

The downlink control information (DCI) used for scheduling of a PDSCH may include a given field indicating the TCI state for the PDSCH (e.g., it may be called a TCI field, TCI state field, etc.). The DCI may be used for scheduling of a PDSCH of one cell, and may be referred to as, for example, DL DCI, DL assignment, DCI format 1_0, or DCI format 1_1.

Whether or not the TCI field is included in the DCI may be controlled by information notified from a base station to the UE. The information may be information (TCI-PresentInDCI) indicating whether the TCI field is present or absent in the DCI. The information may be configured in the UE by, for example, higher layer signaling.

When the DCI includes an x-bit (e.g., x = 3) TCI field, the base station may preliminarily configure, in the UE, up to 2^{x} (e.g., eight when x = 3) types of TCI states using the higher layer signaling. A value of the TCI field in the DCI (TCI field value) may indicate one of the TCI-states preliminarily configured by higher layer signaling.

When more than eight types of TCI states are configured in the UE, MAC CE may be used to activate (or specify) eight or less types of TCI states. The MAC CE may be referred to as a TCI states activation/deactivation for UE-specific PDSCH MAC CE. A value of the TCI field in the DCI may indicate one of the TCI states activated by MAC CE.

The MAC CE is used to specify a TCI state to be mapped to a code point of the TCI field of the DCI among TCI state IDs configured by RRC signaling, and to activate the TCI state. The activated TCI state may be mapped in ascending or descending order of the TCI state IDs to the code point values zero to 2^{x} - 1 (e.g., seven when x = 3) of the TCI field mentioned above.

When n is set to a slot for the UE to transmit hybrid automatic repeat request acknowledgement (HARQ-ACK) for the PDSCH that has provided the MAC CE, the activation/deactivation based on the MAC CE (mapping of TCI fields and TCI states in the DCI) may be applied from slot n + 3*(the number of slots in a subframe) + 1. That is, in the slot n + 3*(the number of slots in a subframe) + 1, update of the code point of the TCI field based on the MAC CE may be effective.

If the time offset between the reception of the DL DCI and the reception of the PDSCH corresponding to the DCI is greater than or equal to a given threshold, the UE may assume that the DM-RS ports of PDSCH of a serving cell are quasi co-located with the RS(s) in the TCI state with respect to the QCL type parameter(s) given by the indicated TCI state specified by the DCI.

The time offset between the reception of the DL DCI and the reception of the PDSCH corresponding to the DCI may be referred to as a scheduling offset.

Further, the above-mentioned given threshold may be referred to as "threshold", "threshold for offset between a DCI indicating a TCI state and a PDSCH scheduled by the DCI", "threshold-Sched-Offset", schedule offset threshold, scheduling offset threshold, and the like.

The scheduling offset threshold may be based on the UE capability, and may be based on, for example, the delay caused by decoding the PDCCH and beam switching. The information of the scheduling offset threshold may be configured from the base station using higher layer signaling, or may be transmitted from the UE to the base station.

In addition, if the scheduling offset is less than the scheduling offset threshold, the UE may assume that the DM-RS ports of PDSCH of a serving cell are quasi co-located with the RS(s) in the TCI state with respect to the QCL parameter(s) used for PDCCH quasi co-location indication of the lowest CORESET-ID in the latest slot in which one or more control resource sets (CORESETs) within the active BWP (Bandwidth Part) of the serving cell are configured or the UE.

For example, the UE may assume that the DMRS ports of the PDSCH are quasi co-located with the DL-RS based on the TCI state activated for the CORESET corresponding to the lowest CORESET-ID. The latest slot may be, for example, a slot that receives the DCI that schedules the PDSCH.

Note that the CORESET-ID may be an ID (ID for identifying CORESET) configured by the RRC information element "ControlResourceSet".

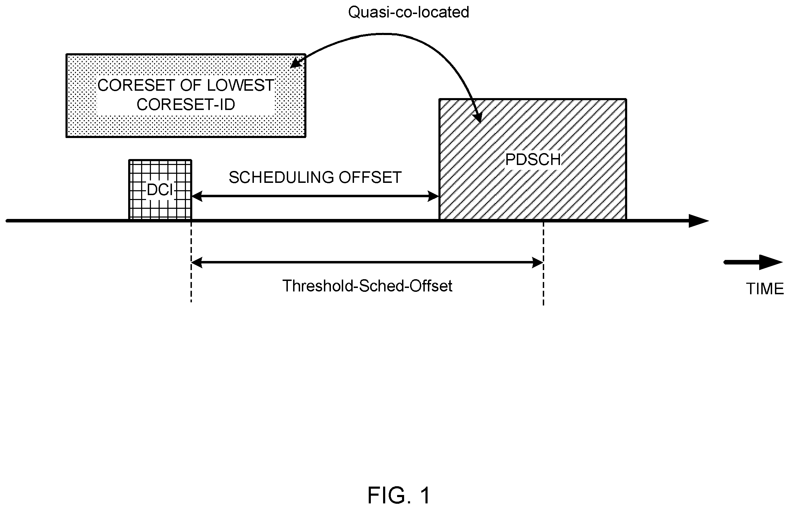

Fig. 1 is a diagram showing an example of the QCL assumption of the DMRS port of PDSCH. In this example, the scheduling offset is smaller than the scheduling offset threshold. Therefore, the UE may assume that the DMRS ports of the PDSCH are quasi co-located with the RS(s) (e.g., DMRS for PDCCH) in the TCI state for PDCCH corresponding to the lowest CORESET-ID in the latest slot.

### (CSI)

In the NR, the UE measures a channel state using given reference signals (or a resource for the reference signals), and feeds back (reports) channel state information (CSI) to a base station.

The UE may measure the channel state using a channel state information reference signal (CSI-RS), a synchronization signal/physical broadcast channel (SS/PBCH) block, a synchronization signal (SS), a demodulation reference signal (DMRS) and the like.

As a method of feeding back the CSI, periodic CSI (P-CSI) reporting, aperiodic CSI (A-CSI, AP-CSI) reporting, semi-persistent CSI (SP-CSI) reporting, and the like are under study.

The SP-CSI reporting using the PUCCH (PUCCH-based SP-CSI reporting) may be activated by the MAC CE. The SP-CSI reporting using the PUSCH (PUSCH-based SP-CSI reporting), the AP-CSI reporting using the PUSCH or PUCCH, and the like may be activated (or triggered) by the DCI.

For example, the CSI request field included in the DCI may specify the trigger state. The trigger state may be configured by higher layer signaling (e.g., RRC signaling). A list of trigger states for the AP-CSI reporting may be configured by an RRC information element "CSI-AperiodicTriggerStateList", and a list of trigger states for the SP-CSI reporting may be configured by an RRC information element "CSI-SemiPersistentOnPUSCH-TriggerStateList". Each trigger state may be associated with one or more reporting configuration IDs (CSI-ReportConfigId), CSI resource configuration information, and the like.

The CSI-RS measured for AP-CSI reporting may be referred to as AP CSI-RS (or A-CSI-RS) (Aperiodic CSI-RS). In AP-CSI reporting, DCI is used to trigger CSI-RS measurement and AP-CSI reporting at the same time, so it is possible to dynamically trigger CSI reporting while efficiently using RS resources and uplink channel resources.

By the way, the period from DCI to AP CSI-RS indicated by the DCI may be specified in relation to the trigger state described above. For example, the UE determines the CSI-RS resource set ID corresponding to the CSI-RS resource set to be measured based on the trigger state. This CSI-RS resource set ID may be associated with an aperiodic triggering offset.

The aperiodic triggering offset may mean the offset between the slot including the DCI that triggers a resource set of the AP CSI-RS and the slot with which the resource set is transmitted. As the aperiodic triggering offset, for example, a value of zero or more and four or less may be set, or a value larger than four may be set. The information on the aperiodic triggering offset may correspond to the RRC parameter "aperiodicTriggeringOffset".

Further, studies are underway to define UE capability for beam switching timing. The UE capability may be referred to as AP-CSI-RS beam switching timing, simply beam switching timing, or the like.

The beam switching timing may be defined by the minimum time between the DCI that triggers the AP CSI-RS measurement (and the AP-CSI reporting) and the AP CSI-RS. The beam switching timing may indicate the time from the last symbol that received the DCI to the first symbol of AP CSI-RS triggered by the DCI.

The beam switching timing may be applied to at least one of a frequency range 1 (FR2) and a frequency range 2 (FR2). For example, FR1 may be a frequency range of 6 GHz and less (sub-6 GHz), and FR2 may be a frequency range higher than 24 GHz (above-24 GHz). The frequency ranges and definitions of FR1 and FR2 are not limited to these.

The beam switching timing may have different values for each subcarrier spacing (e.g., 60 kHz, 120 kHz).

The beam switching timing may be expressed by the number of symbols, and can take values such as 14, 28, 48, 224, and 336 symbols. The relatively large value of 336 symbols was considered in the case where the UE is equipped with multi-panels, taking into account the time it takes to power on the panel that receives the AP CSI-RS from off to on. Since the panel of a non-activated beam may be powered off by the UE, it was considered to cope with the case where the panel is powered off.

Hereinafter, in the present disclosure, the scheduling offset may be replaced with one or both of the PDSCH scheduling offset described above and the AP CSI-RS aperiodic triggering offset.

Further, hereinafter, in the present disclosure, the threshold may be replaced with one or both of the above-mentioned PDSCH scheduling offset threshold and AP CSI-RS beam switching timing.

In NR, the QCL assumption applied to the AP CSI-RS when the scheduling offset for the AP CSI-RS is smaller than the threshold is being studied.

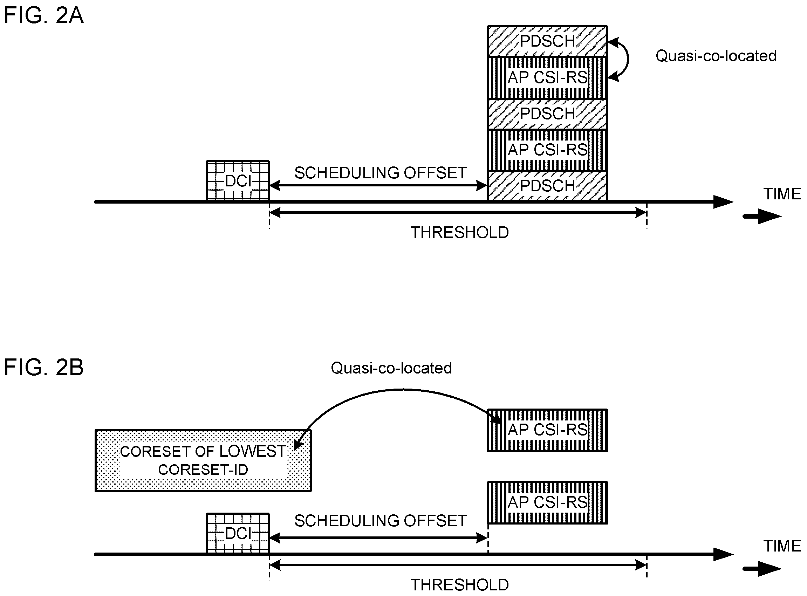

Figs. 2A and 2B are diagrams showing an example of the QCL assumption of AP CSI-RS. In this example, the scheduling offset for AP CSI-RS is smaller than the threshold.

Fig. 2A shows the case where only PDSCH is transmitted with the same symbol as AP-CSI-RS after successful decoding of DCI that schedules PDSCH. In this case, the UE may assume that the AP CSI-RS default QCL assumption is the same as the PDSCH QCL assumption of the same symbol. Note that the scheduling offset for PDSCH may be greater than or equal to the threshold shown.

Fig. 2B shows the case where PDSCH is not transmitted with the same symbol as AP-CSI-RS. In this case, the UE may assume that the AP CSI-RS default QCL assumption is derived from the CORESET corresponding to the lowest CORESET-ID.

### (Multi-panel)

In NR, it is being considered to transmit DL (e.g., PDSCH transmission, AP CSI-RS transmission) from one or more transmitting/receiving points (TRPs) (multi-TRP) to the UE using one or more panels (multi-panel).

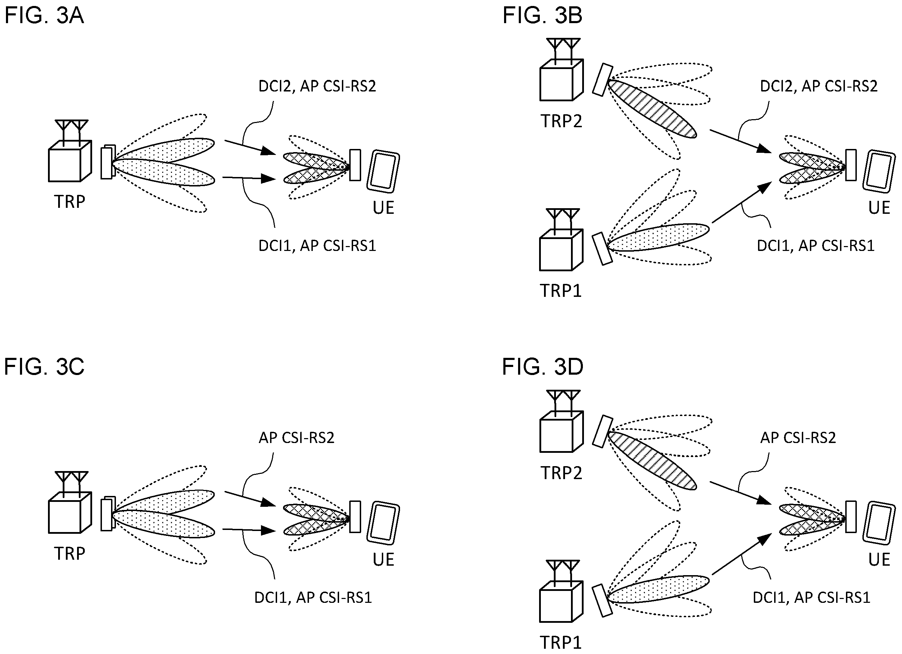

Figs. 3A to 3D show an example of a multi-panel/TRP scenario. Figs. 3A and 3C show an example where one TRP transmits PDCCH and AP CSI-RS to the UE using a multi-panel. Figs. 3B and 3D show an example where two TRPs (TRPs 1 and 2) transmit PDCCH and AP CSI-RS to the UE. In these examples, it is assumed that each TRP is capable of transmitting four different beams, but is not limited to this.

Figs. 3A and 3B correspond to an example in which a plurality of PDCCHs are used for a plurality of AP CSI-RS schedules. The UE receives DCI1 transmitted from panel 1 (or TRP1) and AP CSI-RS1 scheduled (triggered) by the DCI1. The UE receives DCI2 transmitted from panel 2 (or TRP2) and AP CSI-RS2 scheduled by the DCI2.

Figs. 3C and 3D correspond to an example where one PDCCH (single PDCCH) is used for a plurality of AP CSI-RS schedules. The UE receives one DCI transmitted from either Panel 1 (or TRP1) or Panel 2 (or TRP2). The UE also receives AP CSI-RS1 transmitted from panel 1 (or TRP1) and scheduled by the DCI. The UE also receives AP CSI-RS2 transmitted from panel 2 (or TRP2) and scheduled by the DCI.

According to such a multi-panel/TRP scenario, more flexible transmission control using a high quality channel is possible.

However, since the multi-panel/TRP is not considered in the NR specifications so far, the QCL assumption of AP CSI-RS when the multi-panel/TRP is used cannot be properly controlled.

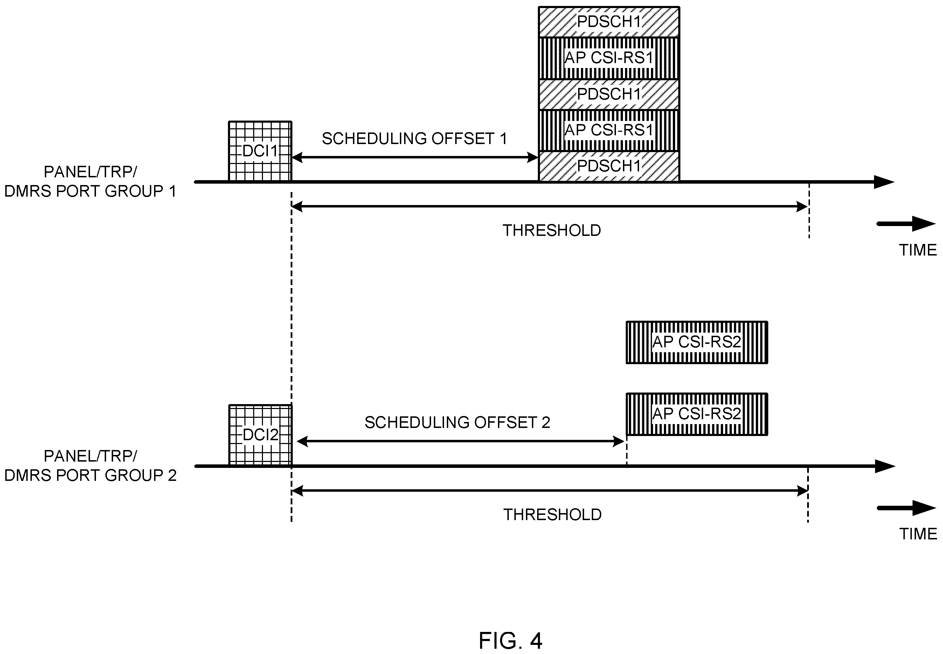

Fig. 4 is a diagram showing the problems of the QCL assumption of AP CSI-RS when the multi-panel/TRP is used. This example corresponds to the example of multi-PDCCH shown in Figs. 3A and 3B.

The UE receives DCI1, PDSCH1, and AP CSI-RS1 transmitted from panel 1 (or TRP1 or DMRS port group 1). PDSCH1 and AP CSI-RS1 are transmitted with the same symbol. The scheduling offset 1 from the reception of the DCI1 to PDSCH1 and AP CSI-RS1 is smaller than the threshold.

The UE also receives DCI2 and AP CSI-RS2 transmitted from panel 2 (or TRP2 or DMRS port group 2). The scheduling offset 2 from the reception of the DCI2 to AP CSI-RS2 is smaller than the threshold.

In the example of Fig. 4, how to assume the QCL of AP CSI-RS1 and AP CSI-RS2 has not been studied so far. Therefore, if the current NR specifications are followed, spatial diversity gain, high-rank transmission, etc. when using multi-panel/TRP cannot be suitably realized, and an increase in communication throughput may be suppressed.

Therefore, the present inventors have conceived a QCL assumption that can be applied when using a multi-panel/TRP.

Hereinafter, embodiments according to the present disclosure will be described in detail with reference to the drawings. The radio communication method according to each of the embodiments may be applied independently, or may be applied in combination with others.

Note that in the present disclosure, the panel, TRP, DMRS port, DMRS port group, PDSCH, codeword, etc. may be replaced with each other. Further, the panel ID and the panel may be replaced with each other.

### (Radio Communication Method)

### <First Embodiment>

In the first embodiment, if the time offset (scheduling offset) between the reception of DCI and the reception of the AP-CSI-RS corresponding to the DCI is smaller than the threshold, the UE may assume that the AP CSI-RS default QCL assumption is derived based on at least one of the following for a specific associated panel ID:
(1) PDSCH with the same symbol,
(2) Lowest CORESET-ID,
(3) CORESET that receives DCI that schedules AP CSI-RS, and
(4) Other downlink (DL) signals with the same symbol.

Here, the specific associated panel ID may be, for example, the lowest or largest panel ID in the latest slot in which one or more CORESETs in the active BWP of the serving cell are configured in the UE. The latest slot here may mean the latest slot in which one or more CORESETs in the active BWP of the serving cell are configured in the UE, or the latest slot to receive DCI.

Note that the other DL signal in (4) above may be, for example, at least one of PSS, SSS, PBCH DMRS, PDCCH, PDCCH DMRS, P-CSI-RS, SP-CSI-RS, and the like.

When the above (1) or (4) is used, if QCL assumption of the PDSCH or other DL signal is appropriately determined, the UE can preferably perform the reception of AP CSI-RS by using the QCL assumption. This is especially preferred when the UE uses an analog beam as a reception beam.

When the above (2) is used, the UE can appropriately determine the QCL assumption of AP CSI-RS based on the lowest CORESET-ID that can be used as a reference also in other processings.

When the above (3) is used, it is considered that the UE can preferably receive the AP CSI-RS. The fact that the UE measures (receives) an AP CSI-RS means that it should have received the DCI that triggers the AP CSI-RS, so the CORESET QCL assumption of the DCI is considered to be suitable for reception.

The UE may determine how to use the above (1) to (4) for the AP CSI-RS default QCL assumption based on other channels/signals transmitted with the same symbol as the AP CSI-RS.

For example, when the scheduling offset of AP-CSI-RS is smaller than the threshold, and PDSCH is not transmitted and another channel (e.g., PDCCH) is transmitted with the same symbol as the AP-CSI-RS, the UE may determine to use at least one of the above (2) to (4). When the scheduling offset of AP-CSI-RS is smaller than the threshold, and both PDSCH and other DL signals (other DL signals corresponding to (4)) are not transmitted with the same symbol as the AP-CSI-RS, the UE may determine to use at least one of the above (2) to (3).

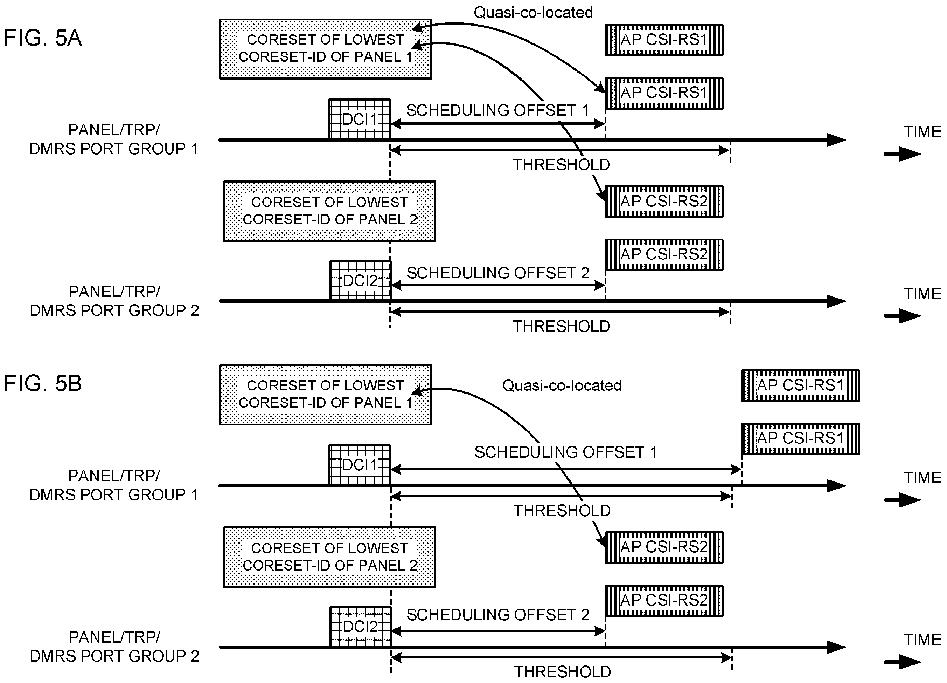

Figs. 5A and 5B are diagrams showing an example of the QCL assumption of AP CSI-RS in the first embodiment.

In the example of Fig. 5A, the UE receives DCI1 and AP CSI-RS1 transmitted from panel 1 (or TRP1 or DMRS port group 1). PDSCH and other DL signals are not transmitted with the same symbols as AP CSI-RS1. The scheduling offset 1 from the reception of the DCI1 to AP CSI-RS1 is smaller than the threshold.

The UE also receives DCI2 and AP CSI-RS2 transmitted from panel 2 (or TRP2 or DMRS port group 2). PDSCH and other DL signals are not transmitted with the same symbols as AP CSI-RS2. The scheduling offset 2 from the reception of the DCI2 to AP CSI-RS2 is smaller than the threshold.

The example of Fig. 5B differs from Fig. 5A in that the scheduling offset 1 is equal to or greater than the threshold. Note that in these examples, the specific associated panel ID is assumed to be panel ID1, but the present invention is not limited to this.

In Fig. 5A, both scheduling offsets 1 and 2 are smaller than the threshold. Therefore, the UE may determine the default QCL assumptions for both AP CSI-RS1 and AP CSI-RS2 based on the lowest CORESET-ID of panel 1 based on the above (2). For example, the UE may assume that both AP CSI-RS1 and AP CSI-RS2 are quasi co-located with the RS in the TCI state for PDCCH corresponding to the lowest CORESET-ID of panel 1 in the latest slot.

Note that DCI1 may be transmitted by CORESET with the lowest CORESET-ID of panel 1, or may be transmitted by another CORESET (similarly in the drawings below, even when CORESET and DCI are described, the DCI may or may not be included in the CORESET).

In Fig. 5B, scheduling offset 1 is greater than the threshold, and scheduling offset 2 is smaller than the threshold. Therefore, the UE may assume that the AP CSI-RS1 is quasi co-located with the RS in the TCI state with respect to the QCL type parameter given by the TCI state indicated by DCI1. The UE may assume that the AP CSI-RS2 is quasi co-located with the RS in the TCI state for PDCCH corresponding to the lowest CORESET-ID of panel 1 in the latest slot.

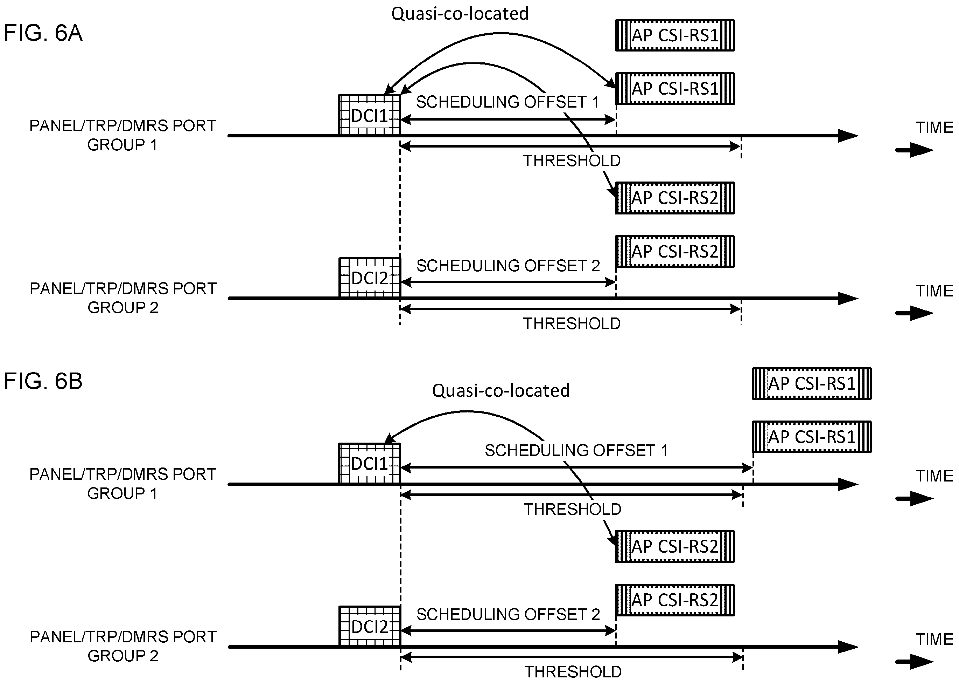

Figs. 6A and 6B are diagrams showing another example of the QCL assumption of the AP CSI-RS in the first embodiment. Figs. 6A and 6B are similar to Figs. 5A and 5B, respectively, except for the QCL assumption.

In Fig. 6A, both scheduling offsets 1 and 2 are smaller than the threshold. Therefore, based on the above (3), the UE may determine the default QCL assumptions for both AP CSI-RS1 and AP CSI-RS2 based on the CORESET that receives the DCI that schedules AP CSI-RS of panel 1. For example, the UE may assume that both AP CSI-RS1 and AP CSI-RS2 are quasi co-located with the RS in the TCI state for PDCCH corresponding to the DCI (that is, DCI1) that schedules AP CSI-RS1 of panel 1 in the latest slot.

In Fig. 6B, scheduling offset 1 is greater than the threshold and scheduling offset 2 is smaller than the threshold. Therefore, the UE may assume that the AP CSI-RS1 is quasi co-located with the RS in the TCI state with respect to the QCL type parameter given by the TCI state indicated by DCI1. The UE may assume that the AP CSI-RS2 is quasi co-located with the RS in the TCI state for PDCCH corresponding to the DCI (that is, DCI1) that schedules the AP CSI-RS1 of panel 1 in the latest slot.

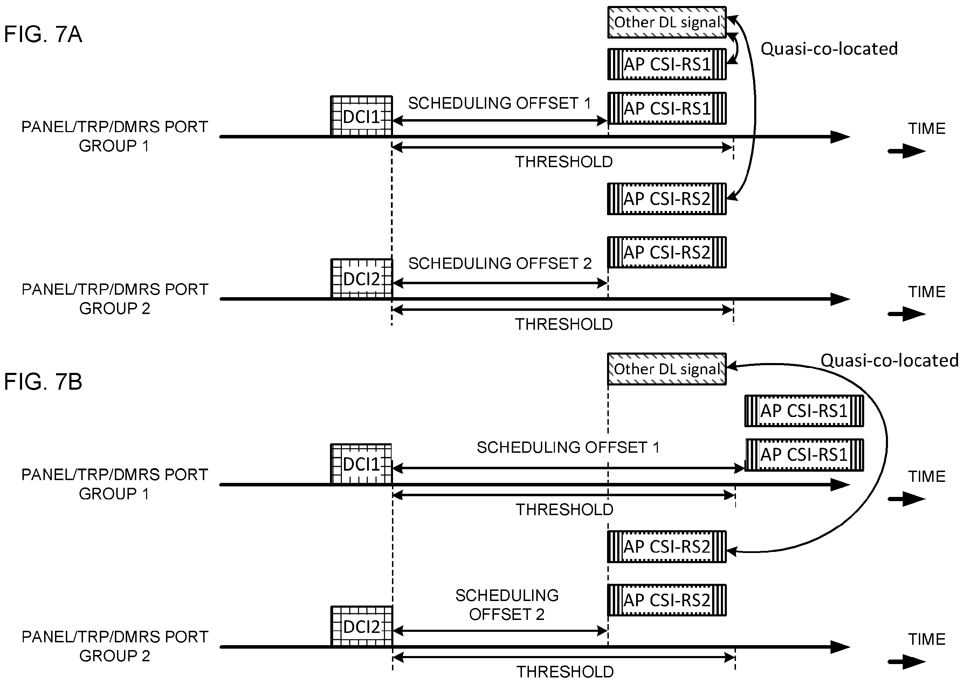

Figs. 7A and 7B are diagrams showing still another example of the QCL assumption of the AP CSI-RS in the first embodiment. Figs. 7A and 7B are similar to Figs. 5A and 5B, respectively, except that another DL signal is transmitted by the panel 1 with the same symbol as the AP CSI-RS2 and the QCL assumption.

In Fig. 7A, both scheduling offsets 1 and 2 are smaller than the threshold. Therefore, the UE may determine the default QCL assumptions for both AP CSI-RS1 and AP CSI-RS2 based on the other DL signals above, based on the above (4). For example, the UE may assume that both AP CSI-RS1 and AP CSI-RS2 are quasi co-located with other DL signals of the same symbol of panel 1.

In Fig. 7B, scheduling offset 1 is greater than the threshold and scheduling offset 2 is smaller than the threshold. Therefore, the UE may assume that the AP CSI-RS1 is quasi co-located with the RS in the TCI state with respect to the QCL type parameter given by the TCI state indicated by DCI1. The UE may assume that the AP CSI-RS2 is quasi co-located with another DL signal of the same symbol of panel 1.

According to the first embodiment described above, the QCL assumption of the AP CSI-RS when the scheduling offset for the AP CSI-RS is smaller than the threshold can be determined based on a specific panel. Also, if the scheduling offset is made smaller than the scheduling offset threshold, the QCL assumptions for a plurality of AP CSI-RSs can be made the same.

### <Second Embodiment>

In the second embodiment, if the time offset (scheduling offset) between the reception of DCI and the reception of the AP-CSI-RS corresponding to the DCI is smaller than the threshold, the UE may assume that the AP CSI-RS default QCL assumption is derived based on at least one of the following for a corresponding associated panel ID:
(1) PDSCH with the same symbol,
(2) Lowest CORESET-ID,
(3) CORESET that receives DCI that schedules AP CSI-RS, and
(4) Other downlink (DL) signals with the same symbol.

Here, the corresponding associated panel ID may be, for example, a panel ID used for transmission or reception of the above AP CSI-RS (or DCI).

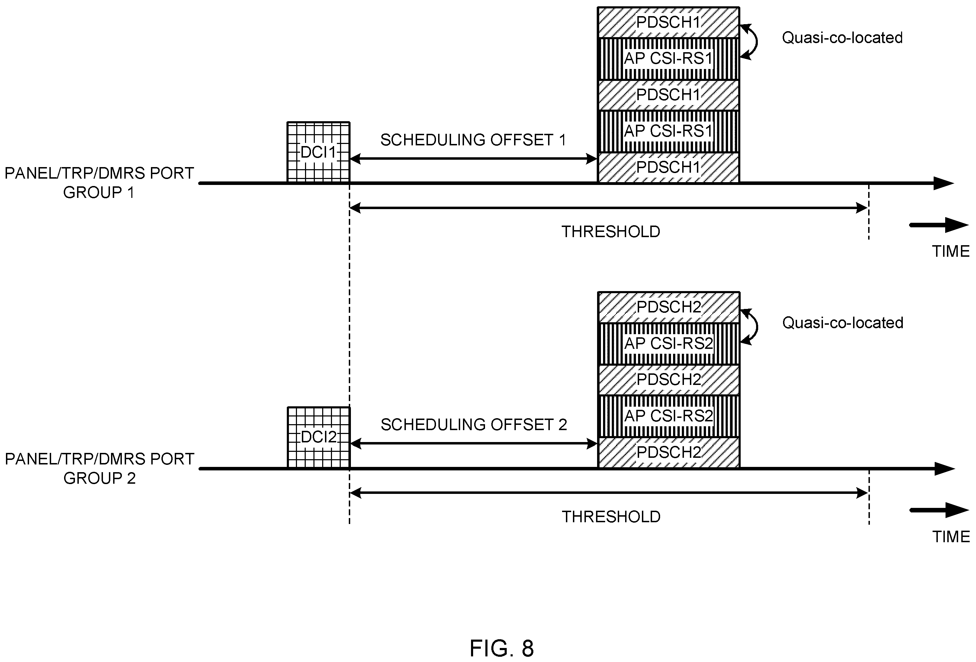

Fig. 8 is a diagram showing an example of the QCL assumption of the AP CSI-RS in the second embodiment.

In Fig. 8, the UE receives DCI1, PDSCH1, and AP CSI-RS1 transmitted from panel 1 (or TRP1 or DMRS port group 1). PDSCH1 and AP CSI-RS1 are transmitted with the same symbol. The scheduling offset 1 from the reception of the DCI1 to PDSCH1 and AP CSI-RS1 is smaller than the threshold.

Also, in Fig. 8, the UE receives DCI2, PDSCH2, and AP CSI-RS2 transmitted from panel 2 (or TRP2 or DMRS port group 2). PDSCH2 and AP CSI-RS2 are transmitted with the same symbol. The scheduling offset 2 from the reception of the DCI2 to PDSCH2 and AP CSI-RS2 is smaller than the threshold.

In Fig. 8, both scheduling offsets 1 and 2 are smaller than the threshold. Therefore, the UE may determine the default QCL assumption of AP CSI-RS1 based on PDSCH1 and the default QCL assumption of AP CSI-RS2 based on PDSCH2 based on the above (1).

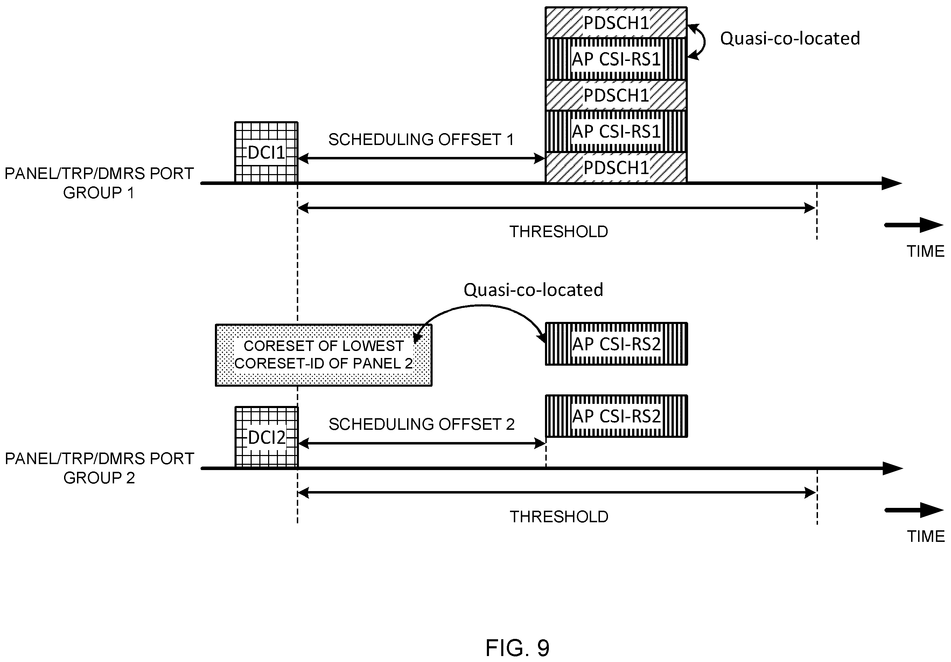

Fig. 9 is a diagram showing another example of the QCL assumption of the AP CSI-RS in the second embodiment.

The example of Fig. 9 is the same as the example of Fig. 8 for panel 1 and the same as the example of Fig. 5A for panel 2, except for the QCL assumption.

In this case, the UE may determine the default QCL assumption of AP CSI-RS1 based on PDSCH1 based on the above (1). The UE may also assume that the AP CSI-RS2 is quasi co-located with the RS in the TCI state for PDCCH corresponding to the lowest CORESET-ID of panel 2 in the latest slot.

According to the second embodiment described above, the QCL assumption of the AP CSI-RS when the scheduling offset for the AP CSI-RS is smaller than the threshold can be determined based on the corresponding panel.

### <Other embodiments>

The first embodiment may be applied, for example, when at least one of the following is satisfied:
- When the UE receives a plurality of PDCCHs (DCI) or PDSCHs from one TRP,
- When the UE receives a plurality of PDCCHs (DCI) or PDSCHs from a multi-panel, and
- When the TCI state of DCI between a multi-TRP or a multi-panel is assumed to be QCL type D.

The second embodiment may be applied, for example, when at least one of the following is satisfied:
- When the UE receives a plurality of PDCCHs (DCI) or PDSCHs from a multi-TRP,
- When the UE receives a plurality of PDCCHs (DCI) or PDSCHs from a multi-panel, and
- When the TCI state of DCI between a multi-TRP or a multi-panel is not assumed to be QCL type D.

Note that in these conditions, the TCI state of DCI may be replaced with at least one of the activated TCI state, the lowest TCI state ID, the TCI state of the lowest CORESET ID, and the like.

The QCL assumption determination method shown in the first embodiment and the second embodiment may be used properly depending on the conditions. In other words, the applicable priority of (1) to (4) of the first embodiment and (1) to (4) of the second embodiment may be determined by the specification or may be set in the UE.

For example, information about at least one of the methods, signals/channels, resources, etc. that the UE uses to determine the AP CSI-RS default QCL assumption may be transmitted to the UE using higher layer signaling, physical layer signaling, or a combination thereof.

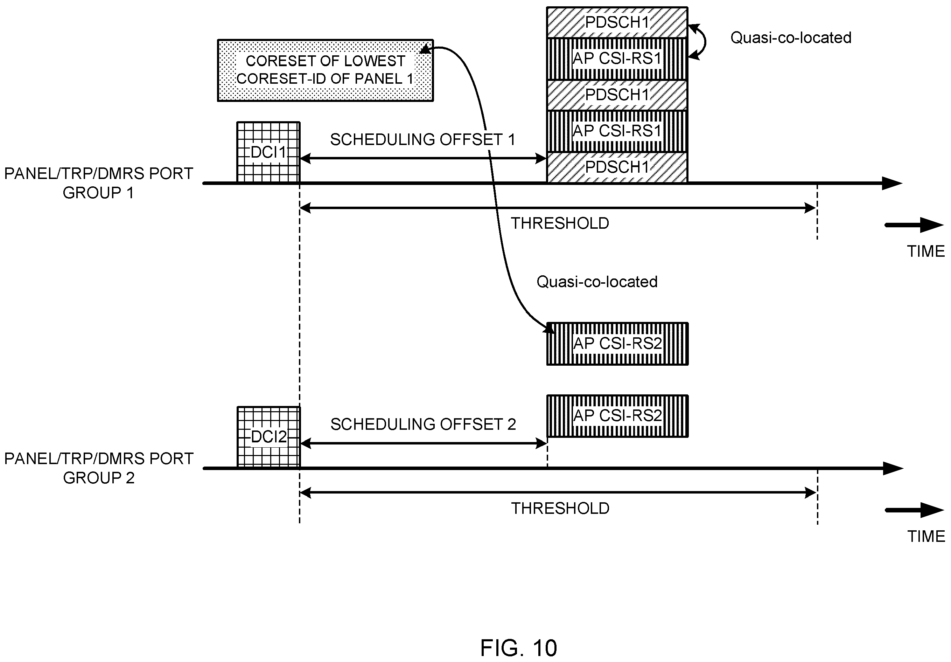

Fig. 10 is a diagram showing an example of the QCL assumption of AP CSI-RS in the combination of the first and second embodiments.

The example of Fig. 10 is the same as the example of Fig. 9 except for the QCL assumption. In this example, it is assumed that if PDSCH is transmitted with the same symbol as the AP CSI-RS in the panel that receives the AP CSI-RS, (1) of the second embodiment is applied, and if not, (2) of the first embodiment is applied.

In this case, the UE may determine the default QCL assumption for AP CSI-RS1 based on PDSCH1. The UE may also assume that the AP CSI-RS2 is quasi co-located with the RS in the TCI state for PDCCH corresponding to the lowest CORESET-ID of panel 1 in the latest slot.

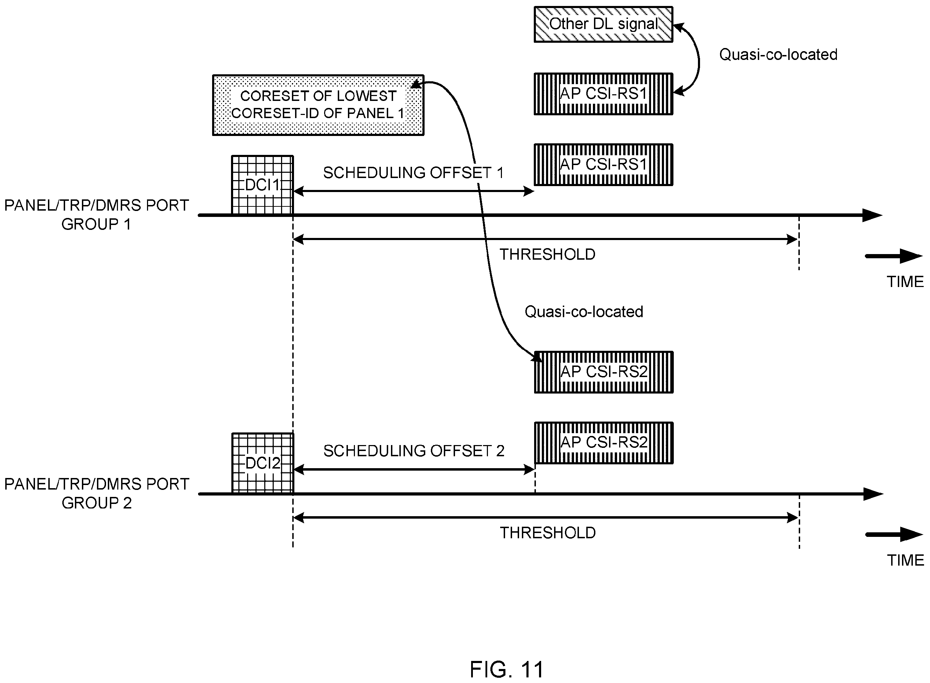

Fig. 11 is a diagram showing another example of the QCL assumption of the AP CSI-RS in the combination of the first and second embodiments.

The example of Fig. 11 is the same as the example of Fig. 7A except for the QCL assumption. In this example, it is assumed that if another DL signal is transmitted with the same symbol in the panel that receives the AP CSI-RS, (4) of the second embodiment is applied, and if not, (2) of the first embodiment is applied.

In this case, the UE may determine the default QCL assumption of AP CSI-RS1 based on the other DL signals of panel 1. The UE may also assume that the AP CSI-RS2 is quasi co-located with the RS in the TCI state for PDCCH corresponding to the lowest CORESET-ID of panel 1 in the latest slot.

Figs. 5A to 11 show examples of multi-PDCCH as shown in Figs. 3A and 3B, but each embodiment of the present disclosure may be applied to a single PDCCH as shown in Figs. 3C and 3D.

For example, in Fig. 5A, if DCI1 does not exist and DCI2 schedules AP CSI-RS1 and AP CSI-RS2, the UE may assume that both AP CSI-RS1 and AP CSI-RS2 are quasi co-located with the RS in the TCI state for PDCCH corresponding to the lowest CORESET-ID of panel 2 in the latest slot.

Note that, in each embodiment of the present disclosure, examples are shown in which the reception timings of DCI1 and DCI2 are the same, but the present invention is not limited to this. Each embodiment of the present disclosure is also applicable when the DCI reception timing of each panel is different.

Note that the scheduling offsets 1 and 2 shown in the respective embodiments of the present disclosure may be equal or different.

Further, although examples are shown in which the threshold shown in each embodiment of the present disclosure is common regardless of the panel, it may be different for each panel. The threshold may be given by specifications or may be reported as UE capability. Also, the threshold for one panel may be determined using the difference or increment X (e.g., X is the number of symbols) from the threshold for another panel. X may be given by the specification or may be reported as UE capability. X may be different depending on the subcarrier spacing, or may be the same regardless of the subcarrier spacing.

The CORESET-ID indexing method (indexing) may be common (global) to all panels (or TRPs or DMRS port groups) or independent to each panel (or TRP or DMRS port group).

For example, consider an example in which CORESET-ID = 1 and 2 correspond to DMRS port group 1 and CORESET-ID = 3 and 4 correspond to DMRS port group 2. In this case, the lowest CORESET-ID is one. Also, the lowest CORESET-ID for the lowest DMRS port group is one. Also, the lowest CORESET-ID for DMRS port group 1 is one. Also, the lowest CORESET-ID for DMRS port group 2 is three.

Note that the DMRS port group may be associated with each CORESET (for example, the RRC information element "ControlResourceSet" may include the DMRS port group information). The DMRS port group configuration information may include the corresponding CORESET information. For example, information indicating that DMRS port group 1 corresponds to CORESET-ID = 1 and 2 may be configured by the DMRS port group configuration information.

The DMRS port group of the present disclosure may include at least one of the DMRS port group of PDSCH, the DMRS port group of PDCCH, the DMRS port group of PBCH, and the DMRS port group of other channels.

The lowest CORESET-ID of the present disclosure may be replaced with a specific defined CORESET-ID.

### [AP CSI-RS activation]

In one embodiment of the present disclosure, the UE may activate the TCI state for AP CSI-RS based on a given signaling explicitly notified. For example, the given signaling may be MAC signaling (e.g., MAC CE) or physical layer signaling (e.g., DCI). Hereinafter, the description will be made on the assumption that the given signaling is MAC CE, but MAC CE may be replaced with other signaling.

TCI state activation for AP CSI-RS may be replaced with beam activation, TCI state activation, AP-CSI-RS resource activation, and so on.

When AP CSI-RS is triggered by the detected DCI, the UE may assume at least one of the following for the measurement of AP CSI-RS in an activated (active) TCI state:
- When the aperiodic triggering offset is greater than or equal to a first threshold, perform beam measurement or CSI measurement based on the AP CSI-RS.
- When the aperiodic triggering offset is less than the first threshold, beam measurement or CSI measurement based on the AP CSI-RS cannot be performed (or is not performed).

When AP CSI-RS is triggered by the detected DCI, the UE may assume at least one of the following for the measurement of AP CSI-RS in a non-activated (deactive) TCI state:
- When the aperiodic triggering offset is greater than or equal to a second threshold, perform beam measurement or CSI measurement based on the AP CSI-RS.
- When the aperiodic triggering offset is less than the second threshold, beam measurement or CSI measurement based on the AP CSI-RS cannot be performed (or is not performed).

According to such control, even if the aperiodic triggering offset is smaller than the threshold of the beam switching timing of the AP CSI-RS described in the above embodiment, it is possible to perform reception processing based on the TCI state indicated by DCI for the active AP CSI-RS if the aperiodic triggering offset is greater than or equal to the first threshold, and for the deactive AP CSI-RS if the aperiodic triggering offset is greater than or equal to the second threshold.

Note that in the present disclosure, "cannot perform beam measurement or CSI measurement" may be replaced with "perform beam measurement or CSI measurement assuming a given TCI state (QCL)". The "given TCI state (QCL)" may be referred to as the default TCI state (QCL assumption).

This default QCL assumption may be the QCL assumption of AP CSI-RS described in the first and second embodiments of the present disclosure. That is, when the AP CSI-RS whose TCI state is not activated is triggered, the QCL assumption of AP CSI-RS described in the first and second embodiments of the present disclosure may be applied.

Note that, the first threshold and the second threshold may be defined as UE capabilities, respectively, or may be given by specifications. The UE may transmit UE capability information for at least one of these thresholds to the base station. Note that, the first threshold is preferably less than the second threshold, but may be greater than or equal to the second threshold.

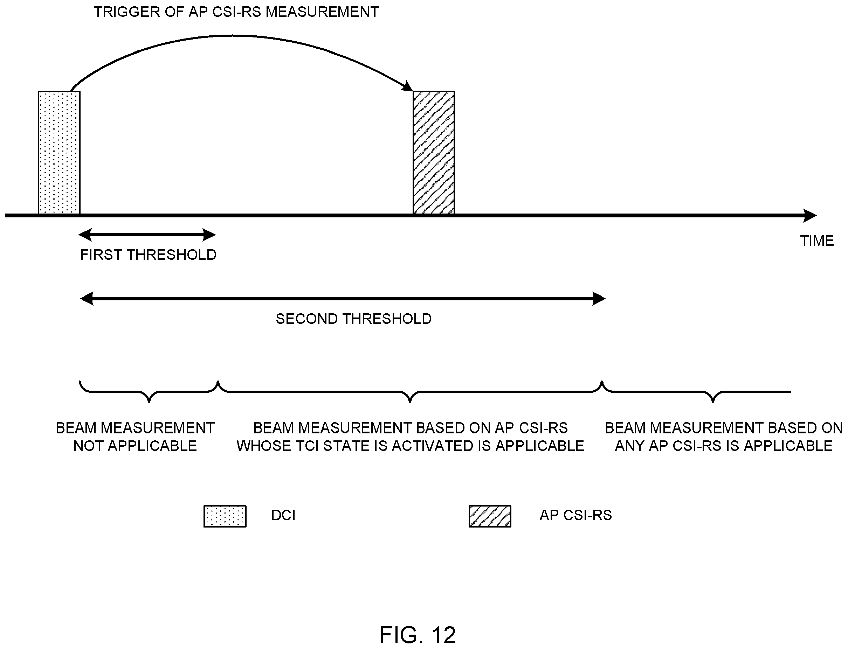

Fig. 12 is a diagram showing an example of control based on the activation of AP CSI-RS. This example shows the case where the first threshold is less than the second threshold. This example also shows the case where the aperiodic triggering offset is equal to or more than the first threshold and less than the second threshold.

If the TCI state of an AP CSI-RS resource shown in Fig. 12 is activated, the UE may apply (perform) beam measurement based on the AP CSI-RS resource.

For example, when the TCI state IDs associated with the AP CSI-RS resource are #1 to #8, of which #1, #2, #4 and #7 are activated, and the DCI instructs measurement of an AP CSI-RS resource for at least one of the TCI state IDs = #1, #2, #4 and #7, the UE may perform beam measurement based on the AP CSI-RS resource.

If the TCI state of an AP CSI-RS resource shown in Fig. 12 is not activated, the UE may assume not to apply (perform) beam measurement based on the AP CSI-RS resource.

Note that, if the aperiodic triggering offset is less than the first threshold, as shown in the figure, the UE may assume that the beam measurement based on the AP CSI-RS triggered by DCI cannot be applied or may perform the beam measurement based on the triggered AP CSI-RS, assuming that the AP CSI-RS has a QCL type D relationship with the DCI.

Also, if the aperiodic triggering offset is greater than or equal to the second threshold, as shown in the figure, the UE may assume that beam measurement based on any AP CSI-RS can be applied (e.g., even for a panel with the power off, it is possible to measure AP CSI-RS using the panel with the power turned on).

Thus, the first threshold may be referred to as a beam switching timing, which does not include the time it takes to activate the TCI state (e.g., the time to power on the panel), a beam switching timing for the active TCI state, and the like. The first threshold may simply represent the time required for beam switching.

Further, the second threshold may be referred to as a beam switching timing including the time required for activating the TCI state, a beam switching timing for the deactive TCI state, and the like.

In the beam switching timing, a value equal to or less than a given value (e.g., 56 symbols) may be defined as the first threshold, and other values may be defined as the second threshold. For example, the first threshold may be a value such as 14, 28, 48 symbols, and the second threshold may be a value such as 224, 336 symbols.

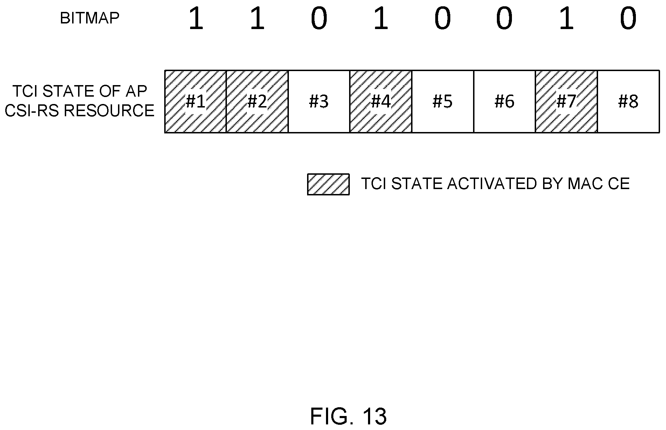

The MAC CE that activates the TCI state of AP CSI-RS may include a bitmap to specify the TCI state to activate. Fig. 13 is a diagram showing an example of information for activating the TCI state of AP CSI-RS.

The TCI state of AP CSI-RS to be activated may be specified by at least one of the TCI state ID (Identifier) configured by upper layer signaling (for example, RRC information element "TCI-State"), CSI-RS resource set ID, an ID (RRC parameter "CSI-ResourceConfigId") of CSI resource configuration information (RRC information element "CSI-ResourceConfig"), CSI-RS resource ID (e.g., RRC parameter "NZP-CSI-RS-ResourceId"), an entry number of the CSI-RS-ResourceSetList included in the CSI resource configuration information, and the like.

Hereinafter, the case of controlling activation/deactivation of the TCI state by using the TCI state ID will be described, but the control is not limited to this, and the control may be performed based on the other IDs described above.

Fig. 13 shows an example of controlling the activation/deactivation of one TCI state with one bit. Each bit of the 8-bit bitmap shown corresponds to a TCI state #1 to #8. Note that the TCI state configured in the UE may not be a serial number. In this case, the TCI states #1 to #8 specified by MAC CE may be replaced with the TCI state IDs set in the UE arranged in ascending or descending order.

Upon receiving the above MAC CE including the bitmap indicating "11010010", the UE may activate TCI state IDs #1, #2, #4 and #7.

Note that the activation of the TCI state of AP CSI-RS is not limited to this. The activation of a plurality of TCI states (TCI state sets) may be controlled by one bit included in the MAC CE, or the activation of TCI state of a specific A-CSI-RS may be controlled based on a beam (or TCI state) in use. Here, the "beam in use" may mean an active beam for at least one channel (or reference signal), a channel/reference signal corresponding to the active beam, and the like.

The UE may control the activation of the TCI state of AP CSI-RS, which is common to all panels/TRPs/DMRS port groups, based on the MAC CE that activates the TCI state of AP CSI-RS, or may control the activation of the TCI state of AP CSI-RS for each panel/TRP/DMRS port group. The MAC CE may include information indicating a panel/TRP/DMRS port group to be applied.

For example, upon receiving the above MAC CE including a bitmap indicating "11010010", the UE may assume that the TCI state IDs #1, #2, #4 and #7 are activated for all panels (e.g., panel 1 and panel 2).

The UE may assume that the TCI state IDs #1, #2, #4 and #7 are activated for panel 1 upon receiving the above MAC CE for panel 1 including a bitmap indicating "11010010". The UE may also assume that the TCI state IDs #1, #2, #5 and #8 are activated for panel 2 upon receiving the above MAC CE for panel 2 including a bitmap indicating "11001001".

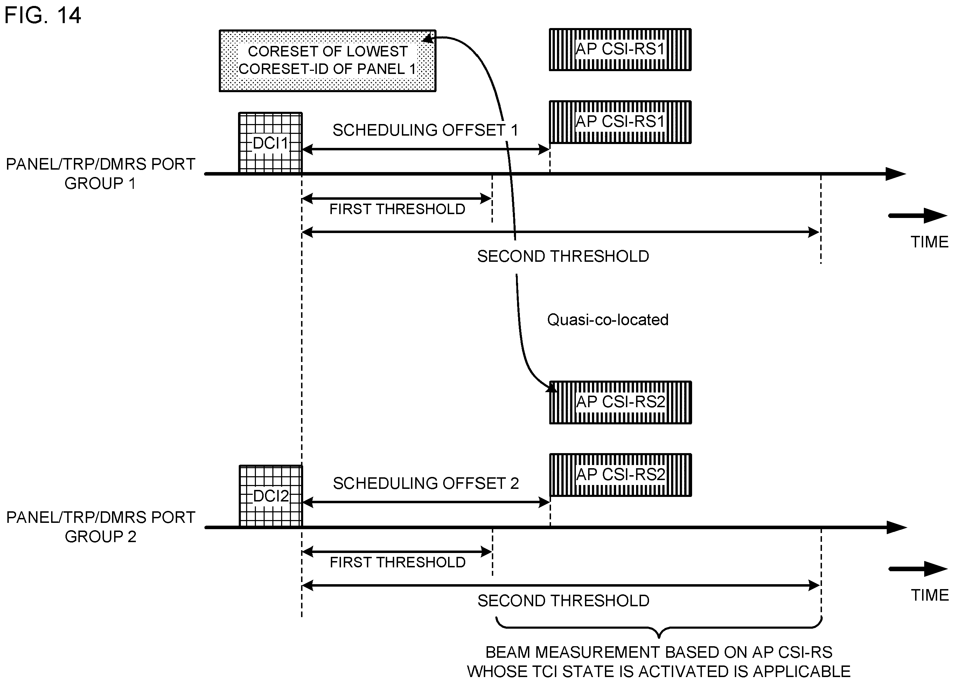

Fig. 14 is a diagram showing an example of the QCL assumption of AP CSI-RS when the activation of AP CSI-RS is controlled.

The example of Fig. 14 is the same as the example of Fig. 5A except for the QCL assumption and activation. In the UE, the TCI state IDs #1, #2, #4 and #7 are activated for panel 1, and the TCI state IDs #1, #2, #5 and #8 are activated for panel 2. Further, in this example, it is assumed that the TCI state ID #7 is indicated in both DCI1 and DCI2.

In Fig. 14, a first threshold and a second threshold are illustrated. Both scheduling offsets 1 and 2 are greater than or equal to the first threshold and smaller than the second threshold.

Since the TCI state ID #7 of panel 1 is active, the UE may assume that AP CSI-RS1 is quasi co-located with the RS in the TCI state with respect to the QCL type parameter given by the TCI state indicated by DCI1.

Since the TCI state ID #7 of panel 2 is deactive, the UE may receive the AP CSI-RS2 according to the default QCL assumption, which may be specified by the method described in the first and second embodiments of the present disclosure or the like. For example, according to (2) of the first embodiment, the UE may assume that the AP CSI-RS2 is quasi co-located with the RS in the TCI state for PDCCH corresponding to the lowest CORESET-ID of panel 1 in the latest slot.

Note that, the UE may determine the QCL assumption of the deactive AP CSI-RS of a panel based on the activated AP CSI-RS of the panel (for example, the AP CSI-RS with the lowest or largest ID among the active ones). For example, in the example of Fig. 14, the UE may assume that AP CSI-RS2 is quasi co-located with the RS with the lowest TCI state ID (here, TCI state ID #1) of the active AP-CSI-RS.

### (Radio Communication System)

A configuration of a radio communication system according to one embodiment of the present disclosure is hereinafter described. In this radio communication system, communication is performed using one or a combination of the radio communication methods according to the embodiment of the present disclosure.

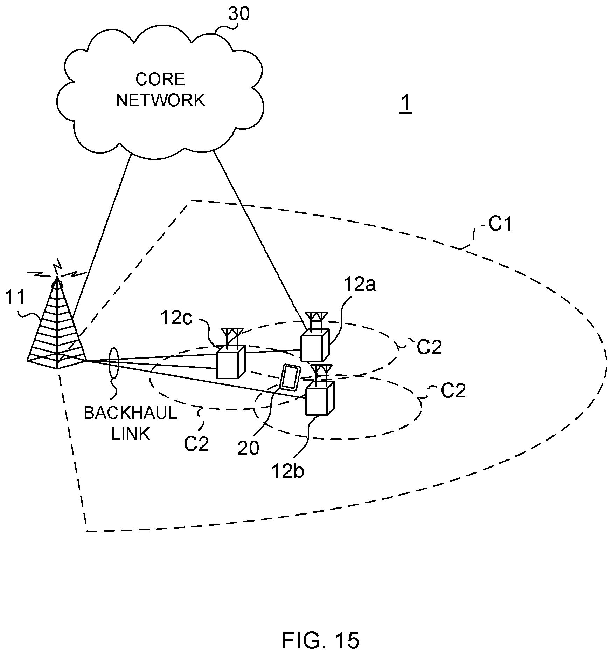

Fig. 15 is a diagram illustrating an example of a schematic configuration of a radio communication system according to an embodiment. A radio communication system 1 may be a system that implements communication using long term evolution (LTE), 5th generation mobile communication system new radio (5G NR), and the like specified by third generation partnership project (3GPP).

Further, the radio communication system 1 may support dual connectivity (multi-RAT dual connectivity (MR-DC)) between a plurality of RATs (Radio Access Technology). MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In EN-DC, an LTE (E-UTRA) base station (eNB) is a master node (MN), and an NR base station (gNB) is a secondary node (SN). In NE-DC, an NR base station (gNB) is MN, and an LTE (E-UTRA) base station (eNB) is SN.

The radio communication system 1 may support dual connectivity between a plurality of base stations in identical RAT (for example, dual connectivity in which both MN and SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are disposed within the macro cell C1 and that form small cells C2 narrower than the macro cell C1. A user terminal 20 may be located in at least one cell. The arrangement, number, and the like of cells and the user terminals 20 are not limited to the aspects illustrated in the drawings. Hereinafter, the base stations 11 and 12 will be collectively referred to as "base stations 10", unless these are distinguished from each other.

The user terminal 20 may be connected to at least one of the plurality of base stations 10. The user terminal 20 may use at least one of carrier aggregation and dual connectivity (DC) using a plurality of component carriers (CC).

Each CC may be included in at least one of a frequency range 1 (FR1) and a frequency range 2 (FR2). The macro cell C1 may be included in FR1, and a small cell C2 may be included in FR2. For example, FR1 may be a frequency range of 6 GHz and less (sub-6 GHz), and FR2 may be a frequency range higher than 24 GHz (above-24 GHz). Note that, the frequency ranges, definitions, and the like of FR1 and FR2 are not limited to these, and for example, FR1 may be a frequency range higher than FR2.

In addition, the user terminal 20 may perform communication in each CC using at least one of time division duplex (TDD) and frequency division duplex (FDD).

The plurality of base stations 10 may be connected by wire (e.g., an optical fiber or an X2 interface in compliance with common public radio interface (CPRI)) or by radio (e.g., NR communication). For example, when NR communication is used as a backhaul between the base stations 11 and 12, the base station 11 corresponding to a higher station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of evolved packet core (EPC), 5G core network (5GCN), next generation core (NGC), and the like.

The user terminal 20 may be a terminal corresponding to at least one of communication schemes such as LTE, LTE-A, and 5G.

In the radio communication system 1, a radio access scheme based on orthogonal frequency division multiplexing (OFDM) may be used. For example, in at least one of downlink (DL) and uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access scheme may be referred to as a waveform. Note that in the radio communication system 1, another radio access scheme (for example, another single carrier communication scheme or another multi-carrier communication scheme) may be used as the UL and DL radio access scheme.

In the radio communication system 1, as a downlink channel, a physical downlink shared channel (PDSCH) shared by the user terminals 20, a physical broadcast channel (PBCH), a physical downlink control channel (PDCCH), or the like may be used.

In the radio communication system 1, as an uplink channel, a physical uplink shared channel (PUSCH) shared by the user terminals 20, a physical uplink control channel (PUCCH), a physical random access channel (PRACH), or the like may be used.

User data, higher layer control information, SIB (System Information Block), and the like are communicated by the PDSCH. User data, higher layer control information, and the like may be communicated by the PUSCH. Further, master information block (MIB) may be communicated by the PBCH.

Lower layer control information may be communicated by the PDCCH. The lower layer control information may include, for example, downlink control information (DCI) including scheduling information of at least one of PDSCH and PUSCH.

Note that DCI that schedules PDSCH may be referred to as DL assignment, DL DCI, or the like, and DCI that schedules PUSCH may be referred to as UL grant, UL DCI, or the like. Note that PDSCH may be replaced with DL data, and PUSCH may be replaced with UL data.

A control resource set (CORESET) and a search space may be used to detect PDCCH. The CORESET corresponds to a resource that searches for DCI. The search space corresponds to a search area and a search method for PDCCH candidates. One CORESET may be associated with one or more search spaces. The UE may monitor CORESET associated with a certain search space based on search space configuration.

One SS may correspond to a PDCCH candidate corresponding to one or more aggregation levels. One or more search spaces may be referred to as a search space set. Note that "search space", "search space set", "search space configuration", "search space set configuration", "CORESET", "CORESET configuration", and the like in the present disclosure may be replaced with each other.

Channel state information (CSI), delivery acknowledgment information (for example, hybrid automatic repeat request acknowledgement (HARQ-ACK), which may be referred to as ACK/NACK or the like), scheduling request (SR), and the like may be communicated by the PUCCH. A random access preamble for establishing a connection with a cell may be communicated by the PRACH,

Note that in the present disclosure, downlink, uplink, and the like may be expressed without "link". Further, various channels may be expressed without adding "physical" at the beginning thereof.

In the radio communication system 1, a synchronization signal (SS), a downlink reference signal (DL-RS), and the like may be communicated. In the radio communication systems 1, a cell-specific reference signal (CRS), a channel state information reference signal (CSI-RS), a demodulation reference signal (DMRS), a positioning reference signal (PRS), a phase tracking reference signal (PTRS), and the like may be communicated as DL-RS.

The synchronization signal may be, for example, at least one of a primary synchronization signal (PSS) and a secondary synchronization signal (SSS). A signal block including SS (PSS or SSS) and PBCH (and DMRS for PBCH) may be referred to as an SS/PBCH block, an SSB (SS Block), and the like. Note that SS, SSB, or the like may also be referred to as a reference signal.

Further, in the radio communication system 1, a sounding reference signal (SRS), a demodulation reference signal (DMRS), and the like may be communicated as an uplink reference signal (UL-RS). Note that, DMRS may be referred to as a "user terminal-specific reference signal (UE-specific Reference Signal)."

### (Base Station)

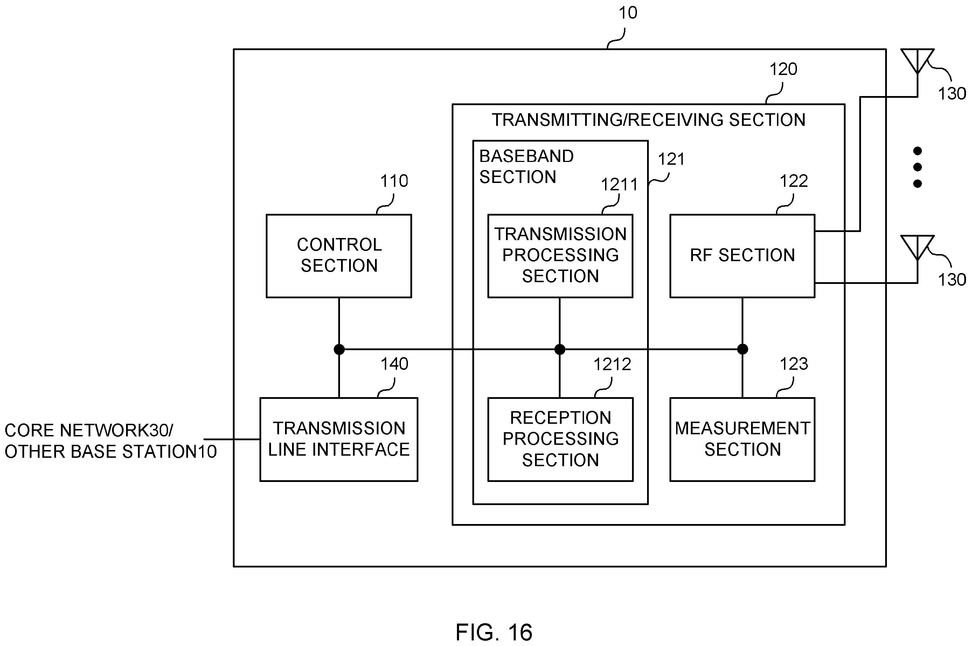

Fig. 16 is a diagram illustrating an example of a configuration of a base station according to an embodiment. The base station 10 includes a control section 110, a transmitting/receiving section 120, a transmitting/receiving antenna 130, and a transmission line interface 140. Note that one or more of the control sections 110, one or more of the transmitting/receiving sections 120, one or more of the transmitting/receiving antennas 130, and one or more of the transmission line interfaces 140 may be included.

Note that, although this example will primarily illustrate functional blocks that pertain to characteristic parts of the present embodiment, it may be assumed that the base station 10 has other functional blocks that are necessary for radio communication as well. A part of processing of each section described below may be omitted.

The control section 110 controls the entire base station 10. The control section 110 can be constituted by a controller, a control circuit, or the like, which is described based on common recognition in the technical field to which the present disclosure relates.

The control section 110 may control signal generation, scheduling (e.g., resource allocation or mapping), and the like. The control section 110 may control transmitting/receiving, measurement, and the like using the transmitting/receiving section 120, the transmitting/receiving antenna 130, and the transmission line interface 140. The control section 110 may generate and transfer data to be transmitted as a signal, control information, a sequence, and the like to the transmitting/receiving section 120. The control section 110 may perform call processing (such as configuration or releasing) of a communication channel, management of the state of the base station 10, management of a radio resource, and the like.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can be constituted by a transmitter/receiver, an RF circuit, a baseband circuit, a filter, a phase shifter, a measurement circuit, a transmitting/receiving circuit, and the like, which are described based on common recognition in the technical field to which the present disclosure relates.

The transmitting/receiving section 120 may be constituted as an integrated transmitting/receiving section, or may be constituted by a transmission section and a reception section. The transmission section may be constituted by the transmission processing section 1211 and the RF section 122. The reception section may be constituted by the reception processing section 1212, the RF section 122, and the measurement section 123.

The transmitting/receiving antenna 130 can be constituted by an antenna described based on common recognition in the technical field to which the present disclosure relates, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a transmission beam and a reception beam by using digital beam forming (e.g., precoding), analog beam forming (e.g., phase rotation), and the like.

The transmitting/receiving section 120 (transmission processing section 1211) may perform packet data convergence protocol (PDCP) layer processing, radio link control (RLC) layer processing (e.g., RLC retransmission control), medium access control (MAC) layer processing (e.g., HARQ retransmission control), and the like, for example, on data or control information acquired from the control section 110 to generate a bit string to be transmitted.

The transmitting/receiving section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-analog conversion on a bit string to be transmitted, and may output a baseband signal.

The transmitting/receiving section 120 (RF section 122) may perform modulation to a radio frequency band, filtering processing, amplification, and the like on the baseband signal, and may transmit a signal in the radio frequency band via the transmitting/receiving antenna 130.

Meanwhile, the transmitting/receiving section 120 (RF section 122) may perform amplification, filtering processing, demodulation to a baseband signal, and the like on the signal in the radio frequency band received by the transmitting/receiving antenna 130.

The transmitting/receiving section 120 (reception processing section 1212) may apply reception processing such as analog-digital conversion, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal to acquire user data and the like.

The transmitting/receiving section 120 (measurement section 123) may perform measurement on the received signal. For example, the measurement section 123 may perform radio resource management (RRM) measurement, channel state information (CSI) measurement, and the like based on the received signal. The measurement section 123 may perform measurement on the received power (e.g., reference signal received power (RSRP)), received quality (e.g., reference signal received quality (RSRQ), signal to interference plus noise ratio (SINR), signal to noise ratio (SNR)), signal strength (e.g., received signal strength indicator (RSSI)), propagation path information (e.g., CSI), and the like. The measurement result may be output to the control section 110.

The transmission line interface 140 may transmit/receive a signal (backhaul signaling) to and from an apparatus included in the core network 30, other base stations 10, and the like, and may perform acquisition, transmission, and the like of user data (user plane data), control plane data, and the like for the user terminal 20.

Note that, the transmission section and the reception section of the base station 10 in the present disclosure may be constituted by at least one of the transmitting/receiving section 120, the transmitting/receiving antenna 130, and the transmission line interface 140.

Note that, the transmitting/receiving section 120 may transmit a plurality of AP CSI-RSs to the user terminal 20 by using a plurality of panels. Further, the transmitting/receiving sections 120 of the plurality of base stations 10 may transmit a plurality of AP CSI-RSs to the user terminal 20.

For each AP CSI-RS, the control section 110 may perform transmission processing so that the AP CSI-RS is quasi co-located with a specific signal or channel of a given panel ID (Identifier) when the time offset between the reception of the corresponding downlink control information (DCI) and the reception of the AP CSI-RS is smaller than a given threshold.

Note that, the given panel ID may be the lowest or largest panel ID. The given panel ID may be the corresponding associated panel ID (e.g., the panel ID of the base station 10 used for AP CSI-RS).

### (User Terminal)

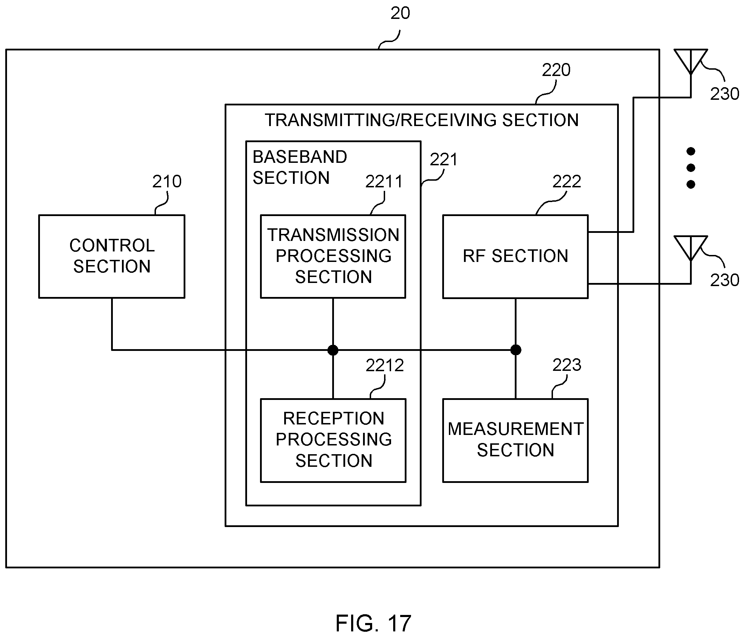

Fig. 17 is a diagram illustrating an example of a configuration of a user terminal according to an embodiment. The user terminal 20 includes a control section 210, a transmitting/receiving section 220, and a transmitting/receiving antenna 230. Note that, one or more of the control sections 210, one or more of the transmitting/receiving sections 220, and one or more of the transmitting/receiving antennas 230 may be included.

Note that, although this example mainly describes a functional block which is a characteristic part of the present embodiment, it may be assumed that the user terminal 20 also has another functional block necessary for radio communication. A part of processing of each section described below may be omitted.

The control section 210 controls the entire user terminal 20. The control section 210 can be constituted by a controller, a control circuit, or the like, which is described based on common recognition in the technical field to which the present disclosure relates.

The control section 210 may control signal generation, mapping, and the like. The control section 210 may control transmitting/receiving, measurement, and the like using the transmitting/receiving section 220 and the transmitting/receiving antenna 230. The control section 210 may generate and transfer data to be transmitted as a signal, control information, a sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted by a transmitter/receiver, an RF circuit, a baseband circuit, a filter, a phase shifter, a measurement circuit, a transmitting/receiving circuit, and the like, which are described based on common recognition in the technical field to which the present disclosure relates.

The transmitting/receiving section 220 may be constituted as an integrated transmitting/receiving section, or may be constituted by a transmission section and a reception section. The transmission section may be constituted by the transmission processing section 2211 and the RF section 222. The reception section may be constituted by the reception processing section 2212, the RF section 222, and the measurement section 223.

The transmitting/receiving antenna 230 can be constituted by an antenna described based on common recognition in the technical field to which the present disclosure relates, for example, an array antenna, and the like.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a Tx beam and a reception beam by using digital beam forming (e.g., precoding), analog beam forming (e.g., phase rotation), and the like.

The transmitting/receiving section 220 (transmission processing section 2211) may perform PDCP layer processing, RLC layer processing (e.g., RLC retransmission control), MAC layer processing (e.g., HARQ retransmission control), and the like, for example, on data or control information acquired from the control section 210 to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog conversion on a bit string to be transmitted, and may output a baseband signal.

Note that, whether or not to apply DFT processing may be determined based on configuration of transform precoding. When transform precoding is enabled for a channel (e.g., PUSCH), the transmitting/receiving section 220 (transmission processing section 2211) may perform DFT processing as the transmission processing in order to transmit the channel using a DFT-s-OFDM waveform. When transform precoding is not enabled for a channel (for example, PUSCH), the transmitting/receiving section 220 (transmission processing section 2211) does not have to perform DFT processing as the transmission processing.

The transmitting/receiving section 220 (RF section 222) may perform modulation to a radio frequency band, filtering processing, amplification, and the like on the baseband signal, and may transmit a signal in the radio frequency band via the transmitting/receiving antenna 230.

Meanwhile, the transmitting/receiving section 220 (RF section 222) may perform amplification, filtering processing, demodulation to a baseband signal, and the like on the signal in the radio frequency band received by the transmitting/receiving antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal to acquire user data and the like.

The transmitting/receiving section 220 (measurement section 223) may perform measurement on the received signal. For example, the measurement section 223 may perform RRM measurement, CSI measurement, and the like based on the received signal. The measurement section 223 may perform measurement on the received power (e.g., RSRP), received quality (e.g., RSRQ, SINR, or SNR), signal strength (e.g., RSSI), propagation path information (e.g., CSI), and the like. The measurement result may be output to the control section 210.

Note that, the transmission section and the reception section of the user terminal 20 in the present disclosure may be constituted by at least one of the transmitting/receiving section 220, the transmitting/receiving antenna 230, and the transmission line interface 240.

Note that, the transmitting/receiving section 220 may receive a plurality of aperiodic channel state information-reference signals (AP CSI-RS). The plurality of AP CSI-RSs may be transmitted from different TRPs (separate base stations 10), or may be transmitted from different panels.

For each AP CSI-RS, the control section 210 may determine the AP CSI-RS default QCL assumption based on a specific signal or channel of a given panel ID (Identifier) when the time offset between the reception of the corresponding downlink control information (DCI) and the reception of the AP CSI-RS is smaller than a given threshold. The control section 210 may perform reception processing of the AP CSI-RS based on the assumption.

Note that, the given panel ID may be the lowest or largest panel ID. The given panel ID may be the corresponding associated panel ID (e.g., the panel ID of the base station 10 used for AP CSI-RS). When the given panel ID is the corresponding associated panel ID, it may be assumed that the plurality of AP CSI-RSs are transmitted from different TRPs.

The control section 210 may determine the AP CSI-RS default QCL assumption based on another downlink signal of the given panel ID when the PDSCH is not transmitted and the another downlink signal is transmitted in the same symbol as the AP CSI-RS of the given panel ID.

The control section 210 may determine the AP CSI-RS default QCL assumption based on the CORESET (COntrol REsource SET) that receives the downlink control information that schedules the AP CSI-RS.

### (Hardware Configuration)

Note that, the block diagrams used to describe the above embodiments illustrate blocks in functional units. These functional blocks (configuration units) may be implemented in arbitrary combinations of at least one of hardware or software. Also, the method for implementing each functional block is not particularly limited. That is, each functional block may be implemented by a single device physically or logically aggregated, or may be implemented by directly or indirectly connecting two or more physically or logically separate devices (using wires, radio, or the like, for example) and using these plural devices. The functional block may be implemented by combining the one device or the plurality of devices with software.

Here, the functions include, but are not limited to, judging, determination, decision, calculation, computation, processing, derivation, investigation, search, confirmation, reception, transmission, output, access, solution, selection, choosing, establishment, comparison, assumption, expectation, deeming, broadcasting, notifying, communicating, forwarding, configuring, reconfiguring, allocating, mapping, assigning, and so on. For example, a functional block (configuration unit) that causes transmission to function may be called as a transmitting unit, a transmitter, or the like. In any case, as described above, the implementation method is not particularly limited.

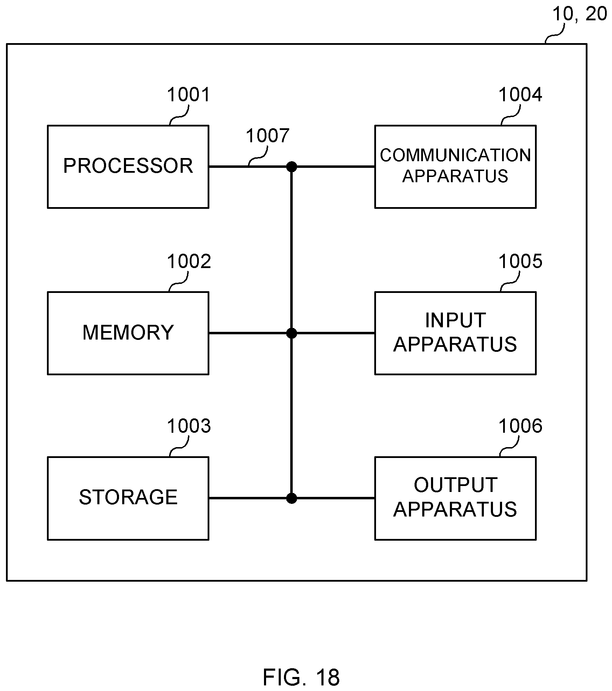

For example, the base station, the user terminal, and so on according to one embodiment of the present disclosure may function as a computer that executes the processing of the radio communication method of the present disclosure. Fig. 18 is a diagram showing an example of a hardware configuration of the base station and the user terminal according to one embodiment. Physically, the above-described base station 10 and user terminal 20 may be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the terms such as an apparatus, a circuit, a device, a section, and a unit can be replaced with each other. The hardware configuration of the base station 10 and the user terminal 20 may be designed to include one or more of the apparatuses illustrated in the drawings, or may be designed not to include some apparatuses.

For example, although only one processor 1001 is shown, a plurality of processors may be provided. Furthermore, processings may be implemented with one processor, or processings may be implemented in parallel, in sequence, or in different manners, on two or more processors. Note that the processor 1001 may be implemented with one or more chips.

Each function of the base station 10 and the user terminal 20 is implemented by, for example, reading given software (program) into hardware such as the processor 1001 and the memory 1002, and by controlling the operation in the processor 1001, the communication in the communication apparatus 1004, and at least one of the reading or writing of data in the memory 1002 and the storage 1003.

The processor 1001 may control the whole computer by, for example, running an operating system. The processor 1001 may be constituted by a central processing unit (CPU) including an interface with peripheral equipment, a control apparatus, an operation apparatus, a register, and the like. For example, at least a part of the above-described control section 110 (210), transmitting/receiving section 120 (220), and the like may be implemented by the processor 1001.

Furthermore, the processor 1001 reads programs (program codes), software modules, data, and so on from at least one of the storage 1003 and the communication apparatus 1004 into the memory 1002, and executes various processing according to these. As the program, a program to cause a computer to execute at least a part of the operation described in the above-described embodiment is used. For example, the control section 110 (210) may be implemented by a control program that is stored in the memory 1002 and operates in the processor 1001, and another functional block may be implemented similarly.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory), and/or other appropriate storage media. The memory 1002 may be referred to as a "register", a "cache", a "main memory (primary storage apparatus)" and so on. The memory 1002 can store a program (program code), a software module, and the like, which are executable for implementing the radio communication method according to one embodiment of the present disclosure.

The storage 1003 is a computer-readable recording medium, and may be constituted by, for example, at least one of a flexible disk, a floppy (registered trademark) disk, a magneto-optical disk (e.g., a compact disc (CD-ROM (Compact Disc ROM) and so on), a digital versatile disc, a Blu-ray (registered trademark) disk), a removable disk, a hard disk drive, a smart card, a flash memory device (e.g., a card, a stick, a key drive), a magnetic stripe, a database, a server, and/or other appropriate storage media. The storage 1003 may be referred to as "secondary storage apparatus."

The communication apparatus 1004 is hardware (transmitting/receiving device) for performing inter-computer communication via at least one of a wired network and a wireless network, and for example, is referred to as "network device", "network controller", "network card", "communication module", and the like. The communication apparatus 1004 may include a high frequency switch, a duplexer, a filter, a frequency synthesizer, and the like in order to implement, for example, at least one of frequency division duplex (FDD) and time division duplex (TDD). For example, the transmitting/receiving section 120 (220), the transmitting/receiving antenna 130 (230), and the like described above may be implemented by the communication apparatus 1004. The transmitting/receiving section 120 (220) may be implemented by being physically or logically separated into a transmission section 120a (220a) and a reception section 120b (220b).

The input apparatus 1005 is an input device for receiving input from the outside (for example, a keyboard, a mouse, a microphone, a switch, a button, a sensor, and so on). The output apparatus 1006 is an output device for allowing sending output to the outside (for example, a display, a speaker, an LED (Light Emitting Diode) lamp, and so on). Note that the input apparatus 1005 and the output apparatus 1006 may be provided in an integrated structure (for example, a touch panel).

Furthermore, these pieces of apparatus, including the processor 1001, the memory 1002 and so on are connected by the bus 1007 so as to communicate information. The bus 1007 may be formed with a single bus, or may be formed with buses that vary between pieces of apparatus.

Also, the base station 10 and the user terminal 20 may be configured to include hardware such as a microprocessor, a digital signal processor (DSP), an application-specific integrated circuit (ASIC), a programmable logic device (PLD), a field programmable gate array (FPGA), and so on, and part or all of the functional blocks may be implemented by the hardware. For example, the processor 1001 may be implemented with at least one of these pieces of hardware.

### (Variations)

Note that terms described in the present disclosure and terms necessary for understanding the present disclosure may be replaced with other terms that have the same or similar meanings. For example, a channel, a symbol, and a signal (or signaling) may be replaced with each other. In addition, the signal may be a message. A reference signal can be abbreviated as an "RS", and may be referred to as a "pilot", a "pilot signal" and so on, depending on which standard applies. Furthermore, a "component carrier (CC)" may be referred to as a "cell," a "frequency carrier," a "carrier frequency" and so on.

A radio frame may be formed with one or more periods (frames) in the time domain. Each of the one or more periods (frames) constituting a radio frame may be referred to as a "subframe". Furthermore, a subframe may be formed with one or multiple slots in the time domain. A subframe may be a fixed time duration (e.g., 1 ms) that is not dependent on numerology.

Here, the numerology may be a communication parameter used for at least one of transmission or reception of a certain signal or channel. For example, the numerology may indicate at least one of subcarrier spacing (SCS), a bandwidth, a symbol length, a cyclic prefix length, a transmission time interval (TTI), the number of symbols per TTI, a radio frame structure, specific filtering processing to be performed by a transceiver in the frequency domain, specific windowing processing to be performed by a transceiver in the time domain, and so on.

A slot may be formed with one or more symbols in the time domain (Orthogonal Frequency Division Multiplexing (OFDM) symbols, Single Carrier Frequency Division Multiple Access (SC-FDMA) symbols, or the like). Also, a slot may be a time unit based on numerology.

A slot may include a plurality of mini slots. Each mini slot may be formed with one or more symbols in the time domain. Also, a mini slot may be referred to as a "subslot". Each mini slot may be formed with fewer symbols than a slot. A PDSCH (or PUSCH) transmitted in a time unit larger than a mini slot may be referred to as PDSCH (PUSCH) mapping type A. A PDSCH (or PUSCH) transmitted using a mini slot may be referred to as "PDSCH (PUSCH) mapping type

### B".

A radio frame, a subframe, a slot, a mini slot, and a symbol all represent the time unit in signal communication. A radio frame, a subframe, a slot, a mini slot, and a symbol may be each called by other applicable names. Note that time units such as a frame, a subframe, a slot, a mini slot, and a symbol in the present disclosure may be replaced with each other.

For example, one subframe may be referred to as TTI, a plurality of consecutive subframes may be referred to as TTI, or one slot or one mini slot may be referred to as TTI. That is, at least one of the subframe and TTI may be a subframe (1 ms) in the existing LTE, may be a period shorter than 1 ms (for example, one to thirteen symbols), or may be a period longer than 1 ms. Note that the unit to represent the TTI may be referred to as a "slot," a "mini slot", and so on, instead of a "subframe."

Here, a TTI refers to the minimum time unit of scheduling in radio communication, for example. For example, in LTE systems, the base station schedules the radio resources (such as the frequency bandwidth and transmission power that can be used in each user terminal) to allocate to each user terminal in TTI units. Note that the definition of TTIs is not limited to this.

The TTI may be the transmission time unit of channel-encoded data packets (transport blocks), code blocks, codewords and so on, or may be the unit of processing in scheduling, link adaptation and so on. Note that when TTI is given, a time interval (for example, the number of symbols) in which the transport blocks, the code blocks, the codewords, and the like are actually mapped may be shorter than the TTI.

Note that, when one slot or one mini slot is referred to as a "TTI," one or more TTIs (that is, one or more slots or one or more mini slots) may be the minimum time unit of scheduling. Also, the number of slots (the number of mini slots) to constitute this minimum time unit of scheduling may be controlled.

TTI having a time duration of 1 ms may be referred to as usual TTI (TTI in 3GPP Rel. 8 to 12), normal TTI, long TTI, a usual subframe, a normal subframe, a long subframe, a slot, or the like. A TTI that is shorter than the usual TTI may be referred to as "shortened TTI", "short TTI", "partial TTI" (or "fractional TTI"), "shortened subframe", "short subframe", "mini slot", "sub-slot", "slot", or the like.

Note that a long TTI (for example, a usual TTI, a subframe, etc.) may be replaced with a TTI having a time duration exceeding 1 ms, and a short TTI (for example, a shortened TTI, etc.) may be replaced with a TTI having a TTI duration smaller than the TTI duration of a long TTI and not smaller than 1 ms.

A resource block (RB) is the unit of resource allocation in the time domain and the frequency domain, and may include one or a plurality of consecutive subcarriers in the frequency domain. The number of subcarriers included in the RB may be the same regardless of the numerology, and may be twelve, for example. The number of subcarriers included in the RB may be determined based on numerology.

Also, an RB may include one or more symbols in the time domain, and may be one slot, one mini slot, one subframe or one TTI in length. One TTI, one subframe, and the like each may be formed with one or more resource blocks.

Note that one or more RBs may be referred to as a "physical resource block (PRB (Physical RB))," a "subcarrier group (SCG)," a "resource element group (REG)," a "PRB pair," an "RB pair" and so on.

Furthermore, a resource block may be comprised of one or more resource elements (REs). For example, one RE may be a radio resource field of one subcarrier and one symbol.

The bandwidth part (BWP) (which may be called partial bandwidth and the like) may represent a subset of consecutive common RB (common resource blocks) for a certain numerology in a certain carrier. Here, the common RB may be specified by the index of the RB based on a common reference point of the carrier. The PRB may be defined in a BWP and numbered within that BWP.

The BWP may include a BWP for UL (UL BWP) and a BWP for DL (DL BWP). For the UE, one or more BWPs may be configured within one carrier.

At least one of the configured BWPs may be active, and the UE does not need to assume to transmit or receive a given signal/channel outside the active BWP. Note that "cell", "carrier", and the like in the present disclosure may be replaced with "BWP".

Note that the structures of radio frames, subframes, slots, mini slots, symbols, and so on described above are merely examples. For example, configurations pertaining to the number of subframes included in a radio frame, the number of slots per a subframe or a radio frame, the number of mini slots included in a slot, the number of symbols and RBs included in a slot or a mini slot, the number of subcarriers included in an RB, the number of symbols in a TTI, the symbol duration, the length of cyclic prefixes (CPs) and so on can be variously changed.

Furthermore, the information and parameters described in the present disclosure may be represented in absolute values, represented in relative values with respect to given values, or represented using other corresponding information. For example, a radio resource may be specified by a given index.

The names used for parameters and so on in the present disclosure are in no respect limiting. In addition, an equation and so on using these parameters may differ from those explicitly disclosed in the present disclosure. Since various channels (PUCCH (Physical Uplink Control Channel), PDCCH (Physical Downlink Control Channel) and so on) and information elements can be identified by any suitable names, the various names assigned to these individual channels and information elements are in no respect limiting.

The information, signals, and the like described in the present disclosure may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Also, information, signals, and the like can be output at least either from higher layers to lower layers and/or from lower layers to higher layers. Information, signals and so on may be input and output via a plurality of network nodes.

The information, signals and so on that are input and/or output may be stored in a specific location (e.g., in a memory), or may be managed in a control table. The information, signals and so on to be input and/or output can be overwritten, updated or appended. The information, signals and so on that are output may be deleted. The information, signals and so on that are input may be transmitted to other pieces of apparatus.

The reporting of information is by no means limited to the aspects/embodiments described in the present disclosure, and may be performed using other methods. For example, notification of information in the present disclosure may be performed by using physical layer signaling (for example, downlink control information (DCI), uplink control information (UCI), higher layer signaling (for example, radio resource control (RRC) signaling, broadcast information (master information block (MIB), system information block (SIB), or the like), medium access control (MAC) signaling, another signal, or a combination thereof.

Note that physical layer signaling may be referred to as "L1/L2 (Layer 1/Layer 2) control information (L1/L2 control signals)," "L1 control information (L1 control signal)" and so on. Furthermore, the RRC signaling may be referred to as an RRC message, and may be, for example, an RRC connection setup message, an RRC connection reconfiguration message, and the like. Also, MAC signaling may be reported using, for example, MAC control elements (MAC CEs (Control Elements)).

Also, reporting of given information (for example, reporting of information to the effect that "X holds") does not necessarily have to be sent explicitly, and may be sent implicitly (for example, by not reporting this piece of information, or by reporting another piece of information).

Decisions may be made in values represented by one bit (0 or 1), may be made in Boolean values that represent true or false, or may be made by comparing numerical values (for example, comparison against a given value).

Software, whether referred to as "software," "firmware," "middleware," "microcode" or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, commands, information and so on may be transmitted and received via communication media. For example, when software is transmitted from a website, a server, or other remote sources by using at least one of wired technologies (coaxial cables, optical fiber cables, twisted-pair cables, digital subscriber lines (DSLs), and the like) or wireless technologies (infrared radiation, microwaves, and the like), at least one of these wired technologies or wireless technologies are also included in the definition of communication media.

The terms "system" and "network" used in the present disclosure may be used interchangeably. The "network" may mean an apparatus (e.g., a base station) included in the network.

In the present disclosure, terms such as "precoding", "precoder", "weight (precoding weight)", "quasi-Co-Location (QCL)", "transmission configuration indication state (TCI state)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", and "panel" may be used interchangeably.

In the present disclosure, the terms such as "base station (BS)", "radio base station", "fixed station", "NodeB", "eNodeB (eNB)", "gNodeB (gNB)", "access point", "transmission point (TP)", "reception point (RP)", "transmitting/receiving point (TRP)", "panel", "cell", "sector", "cell group", "carrier", and "component carrier" may be used interchangeably. The base station may be referred to as a term such as a macro cell, a small cell, a femto cell, a pico cell, and the like.

A base station can accommodate one or more (e.g., three) cells. When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to all or part of the coverage area of at least one of a base station or a base station subsystem that provides communication services within this coverage.

In the present disclosure, the terms "mobile station (MS)", "user terminal", "user equipment (UE)", "terminal", and the like may be used interchangeably.

A mobile station may be referred to as a subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, or some other suitable terms.

At least one of a base station or a mobile station may be referred to as a transmitting apparatus, a receiving apparatus, a radio communication apparatus, or the like. Note that at least one of the base station and mobile station may be a device mounted on a moving body, a moving body itself, and the like. The moving body may be a transportation (for example, a car, an airplane and so on), an unmanned moving body (for example, a drone, an autonomous car, and so on), or a (manned or unmanned) robot. Note that at least one of the base station or the mobile station also includes a device that does not necessarily move during a communication operation. For example, at least one of the base station or the mobile station may be an IoT (Internet of Things) device such as a sensor.

Furthermore, the base stations in the present disclosure may be replaced with the user terminal. For example, each aspect/embodiment of the present disclosure may be applied to a structure in which communication between the base station and the user terminal is replaced with communication among a plurality of user terminals (which may be referred to as, for example, D2D (Device-to-Device), V2X (Vehicle-to-Everything) and so on). In this case, the user terminal 20 may be configured to have the functions of the base station 10 described above. In addition, the wording such as "up" and "down" may be replaced with the wording corresponding to the terminal-to-terminal communication (for example, "side"). For example, an uplink channel and a downlink channel may be replaced with a side channel.

Likewise, the user terminal in the present disclosure may be replaced with a base station. In this case, the base station 10 may be configured to have the functions of the user terminal 20 described above.

Certain actions that have been described in the present disclosure to be performed by base stations may, in some cases, be performed by their upper nodes. In a network comprised of one or more network nodes with base stations, it is clear that various operations that are performed so as to communicate with terminals can be performed by base stations, one or more network nodes (for example, MMEs (Mobility Management Entities), S-GWs (Serving-Gateways) and so on may be possible, but these are not limiting) other than base stations, or combinations of these.

The aspects/embodiments illustrated in the present disclosure may be used individually or in combinations, which may be switched depending on the mode of implementation. The order of processings, sequences, flowcharts, and so on that have been used to describe the aspects/embodiments in the present disclosure may be re-ordered as long as inconsistencies do not arise. For example, regarding the methods described in the present disclosure, elements of various steps are presented using an illustrative order, and are not limited to the presented specific order.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New Radio Access Technology (New-RAT), New Radio (NR), New radio access (NX), Future generation radio access (FX), Global System for Mobile communications (GSM; registered trademark), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and/or next generation systems or the like that are enhanced based on these. Further, a plurality of systems may be combined and applied (for example, a combination of LTE or LTE-A and 5G, and the like).

The phrase "based on" as used in the present disclosure does not mean "based only on", unless otherwise specified. In other words, the phrase "based on" means both "based only on" and "based at least on."

Reference to elements with designations such as "first", "second", and so on as used in the present disclosure does not generally limit the number/quantity or order of these elements. These designations may be used in the present disclosure only for convenience, as a method for distinguishing between two or more elements. In this way, reference to the first and second elements does not imply that only two elements may be employed, or that the first element must precede the second element in some way.

The terms "judging (determining)" as used in the present disclosure may encompass a wide variety of actions. For example, "judging (determining)" may be interpreted to mean making judgements and determinations related to judging, calculating, computing, processing, deriving, investigating, looking up, search, inquiry (for example, looking up in a table, database, or another data structure), ascertaining, and so on.

Furthermore, to "judge" and "determine" as used herein may be interpreted to mean making judgements and determinations related to receiving (e.g., receiving information), transmitting (e.g., transmitting information), input, output, accessing (e.g., accessing data in a memory) and so on.

In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

In addition, to "judge (determine)" may be replaced with "assuming", "expecting", "considering", and so on.

As used in the present disclosure, the terms "connected" and "coupled", or any variation of these terms mean all direct or indirect connections or coupling between two or more elements, and may include the presence of one or more intermediate elements between two elements that are "connected" or "coupled" to each other. The coupling or connection between the elements may be physical, logical or a combination of these. For example, "connection" may be replaced with "access".

As used in the present disclosure, when two elements are connected, these elements may be considered "connected" or "coupled" to each other by using one or more electrical wires, cables, printed electrical connections, and the like, and, as a number of non-limiting and non-inclusive examples, by using electromagnetic energy having wavelengths in the radio frequency, microwave, and optical (both visible and invisible) domains, or the like.

In the present disclosure, the phrase "A and B are different" may mean "A and B are different from each other". Note that the term may mean that "A and B are respectively different from C". The terms such as "leave" "coupled" and the like may be interpreted as "different".

When the terms such as "include", "including", and variations of these are used in the present disclosure, these terms are intended to be inclusive, in a manner similar to the way the term "comprising" is used. Furthermore, the term "or" as used in the present disclosure is intended to be not an exclusive-OR.

In the present disclosure, when articles, such as "a", "an", and "the" are added in English translation, the present disclosure may include the plural forms of nouns that follow these articles.

Now, although the invention according to the present disclosure has been described in detail above, it is obvious to a person skilled in the art that the invention according to the present disclosure is by no means limited to the embodiments described in the present disclosure. The invention according to the present disclosure can be implemented with corrections and modifications, without departing from the scope of the invention defined by the recitations of claims. Consequently, the description of the present disclosure is provided for the purpose of exemplification and explanation, and has no limitative meaning to the invention according to the present disclosure.

## Claims

1. A terminal (20) comprising:
a receiving section (220) configured to receive a plurality of downlink control information, DCI, each triggering an aperiodic channel state information-reference signal, AP CSI-RS, and to receive a plurality of aperiodic channel state information-reference signals, AP CSI-RSs, from different transmission/reception points, TRPs; and
a control section (210) configured to, when a scheduling offset between a reception of one DCI out of the plurality of DCIs and a reception of the AP CSI-RS corresponding to the one DCI is smaller than a threshold, determines a quasi-co-location, QCL, assumption of the AP CSI-RS based on a physical downlink shared channel, PDSCH, in a same symbol as the AP CSI-RS, corresponding to a transmission/reception point identifier, TRP ID, used for the reception of the one DCI,
wherein when the PDSCH and another downlink signal different from the PDSCH are not transmitted in a same symbol as the AP CSI-RS corresponding to the TRP ID, the control section (210) is configured to determine the QCL assumption of the AP CSI-RS based on a control resource set, CORESET, where the DCI is received.

2. The terminal (20) according to claim 1, wherein when the another downlink signal is transmitted in a same symbol as the AP CSI-RS corresponding to the TRP ID, the control section (210) is configured to determine the QCL assumption of the AP CSI-RS based on the another downlink signal of the TRP ID.

3. A radio communication method for a terminal (20), comprising:
receiving a plurality of downlink control information, DCI, each triggering an aperiodic channel state information-reference signal, AP CSI-RS, and receiving a plurality of aperiodic channel state information-reference signals, AP CSI-RSs, from different transmission/reception points, TRPs; and
when a scheduling offset between a reception of one DCI out of the plurality of DCI and a reception of the AP CSI-RS corresponding to the one DCI is smaller than a threshold, determining a quasi-co-location, QCL, assumption of the AP CSI-RS based on a physical downlink shared channel, PDSCH, in a same symbol as the AP CSI-RS, corresponding to a transmission/reception point identifier, TRP ID, used for the reception of the one DCI,
wherein when the PDSCH and another downlink signal different from the PDSCH are not transmitted in a same symbol as the AP CSI-RS corresponding to the TRP ID, the determining determines the QCL assumption of the AP CSI-RS based on a control resource set, CORESET, where the DCI is received.

4. A system comprising a terminal (20) according to claim 1 or 2, and a base station (10), wherein the base station (10) comprises:
a transmitting section (120) configured to transmit the one DCI.

## Patentansprüche

1. Endgerät (20), umfassend:
einen Empfangsabschnitt (220), der konfiguriert ist, um eine Vielzahl von Downlink-Steuerinformationen, DCI, zu empfangen, die jeweils ein aperiodisches Kanalzustandsinformations-Referenzsignal, AP CSI-RS, auslösen, und um eine Vielzahl von aperiodischen Kanalzustandsinformations-Referenzsignalen, AP CSI-RSs, von verschiedenen Sende-/Empfangspunkten, TRPs, zu empfangen; und
einen Steuerabschnitt (210), der konfiguriert ist, wenn eine zeitliche Verschiebung zwischen einem Empfang einer DCI aus der Vielzahl von DCIs und einem Empfang des AP CSI-RS, das der einen DCI entspricht, kleiner als ein Schwellenwert ist, eine Quasi-Ko-Lokation-, QCL-, Annahme des AP CSI-RS basierend auf einem physischen gemeinsam genutzten Downlink-Kanal, PDSCH, in demselben Symbol wie das AP CSI-RS, entsprechend einer Sende-/Empfangspunktkennung, TRP-ID, die für den Empfang der einen DCI verwendet wird, zu bestimmen,
wobei, wenn der PDSCH und ein anderes Downlink-Signal, das sich von dem PDSCH unterscheidet, nicht in demselben Symbol wie das der TRP-ID entsprechende AP CSI-RS übertragen werden, der Steuerabschnitt (210) konfiguriert ist, um die QCL-Annahme des AP CSI-RS basierend auf einem Steuerressourcensatz, CORESET, in dem die DCI empfangen wird, zu bestimmen.

2. Endgerät (20) nach Anspruch 1, wobei, wenn das andere Downlink-Signal in demselben Symbol wie das der TRP-ID entsprechende AP CSI-RS übertragen wird, der Steuerabschnitt (210) konfiguriert ist, um die QCL-Annahme des AP CSI-RS basierend auf dem anderen Downlink-Signal der TRP-ID zu bestimmen.

3. Funkkommunikationsverfahren für ein Endgerät (20), umfassend:
Empfangen einer Vielzahl von Downlink-Steuerinformationen, DCI, die jeweils ein aperiodisches Kanalzustandsinformations-Referenzsignal, AP CSI-RS, auslösen, und
Empfangen einer Vielzahl von aperiodischen Kanalzustandsinformations-Referenzsignalen, AP CSI-RSs, von verschiedenen Sende-/Empfangspunkten, TRPs; und
wenn eine zeitliche Verschiebung zwischen einem Empfang einer DCI aus der Vielzahl von DCI und einem Empfang des AP CSI-RS, das der einen DCI entspricht, kleiner als ein Schwellenwert ist, Bestimmen einer Quasi-Ko-Lokation-, QCL-, Annahme des AP CSI-RS basierend auf einem physischen gemeinsam genutzten Downlink-Kanal, PDSCH, in demselben Symbol wie das AP CSI-RS, entsprechend einer Sende-/Empfangspunktkennung, TRP-ID, die für den
Empfang der einen DCI verwendet wird,
wobei, wenn der PDSCH und ein anderes Downlink-Signal, das sich von dem PDSCH unterscheidet, nicht in demselben Symbol wie das der TRP-ID entsprechende AP CSI-RS übertragen werden, das Bestimmen die QCL-Annahme des AP CSI-RS basierend auf einem Steuerressourcensatz, CORESET, in dem die DCI empfangen wird, bestimmt.

4. System, das ein Endgerät (20) nach Anspruch 1 oder 2 umfasst, und eine Basisstation (10), wobei die Basisstation (10) umfasst:
einen Übertragungsabschnitt (120), der konfiguriert ist, um die eine DCI zu übertragen.

## Revendications

1. Terminal (20) comprenant :
une section de réception (220), configurée pour recevoir une pluralité d'informations de commande de liaison descendante, DCI, chacune déclenchant un signal de référence d'information sur l'état de canal apériodique, AP CSI-RS, et pour recevoir une pluralité de signaux de référence d'information sur l'état de canal apériodiques, AP CSI-RSs, depuis différents points de transmission/réception, TRPs ; et
une section de commande (210), configurée pour, lorsqu'un décalage de planification entre une réception d'une DCI parmi la pluralité de DCI et une réception de l'AP CSI-RS correspondant à la DCI est en-deçà d'un seuil, déterminer une hypothèse de quasi-co localisation (hypothèse QCL) de l'AP CSI-RS sur la base du fait qu'un canal physique partagé de liaison descendante, PDSCH, dans un même symbole que l'AP CSI-RS, correspond à un identifiant de point de transmission/réception, TRP ID, utilisé pour la réception de la DCI,
dans lequel, lorsque le PDSCH et un autre signal de liaison descendante différent du PDSCH ne sont pas transmis dans un même symbole que l'AP CSI-RS correspondant au TRP ID, la section de commande (210) est configurée pour déterminer l'hypothèse de quasi-co localisation (hypothèse QCL) de l'AP CSI-RS sur la base d'un ensemble de ressources de commande, CORESET, où la DCI est reçue.

2. Terminal (20) selon la revendication 1, dans lequel lorsque l'autre signal de liaison descendante est transmis dans un même symbole que l'AP CSI-RS correspondant au TRP ID, la section de commande (210) est configurée pour déterminer l'hypothèse de quasi-co localisation (hypothèse QCL) de l'AP CSI-RS sur la base de l'autre signal de liaison descendante du TRP ID.

3. Procédé de communication radio pour un terminal (20), comprenant :
le fait de recevoir une pluralité d'informations de commande de liaison descendante, DCI, chacune déclenchant un signal de référence d'information sur l'état de canal apériodique, AP CSI-RS, et
le fait de recevoir une pluralité de signaux de référence d'information sur l'état de canal apériodique, AP CSI-RSs, depuis différents points de transmission/réception, TRPs ; et,
le fait, lorsqu'un décalage de planification entre une réception d'une DCI parmi la pluralité de DCI et une réception de l'AP CSI-RS correspondant à la DCI est plus petit qu'un seuil, de déterminer une hypothèse de quasi-co localisation (hypothèse QCL) de l'AP CSI-RS sur la base d'un canal physique partagé de liaison descendante, PDSCH, dans un même symbole que l'AP CSI-RS, correspondant à un identifiant de point de transmission/réception, TRP ID, utilisé pour la
réception de la DCI,
dans lequel, lorsque le PDSCH et un autre signal de liaison descendante différent du PDSCH ne sont pas transmis dans un même symbole que l'AP CSI-RS correspondant au TRP ID, la détermination détermine l'hypothèse de quasi-co localisation (hypothèse QCL) de l'AP CSI-RS sur la base d'un ensemble de ressources de commande, CORESET, où la DCI est reçue.

4. Système comprenant un terminal (20) selon la revendication 1 ou la revendication 2, et une station de base (10), dans lequel la station de base (10) comprend :
une section de transmission (120) configurée pour transmettre ladite une DCI.
